(19)

**Europäisches Patentamt**
**European Patent Office**
**Office européen des brevets**

(11) **EP 1 494 458 B1**

(12) **EUROPEAN PATENT SPECIFICATION**

(45) Date of publication and mention
of the grant of the patent:
**29.08.2007 Bulletin 2007/35**

(51) Int Cl.:
***H04N 1/52*** *(2006.01)*

(21) Application number: **04015209.2**

(22) Date of filing: **29.06.2004**

(54) **Method and apparatus for forming color image**

Farbbilderzeugungsverfahren und -gerät

Procédé et appareil de formation d'images en couleurs

(84) Designated Contracting States:
**DE FR GB**

(30) Priority: **03.07.2003 JP 2003191296**

(43) Date of publication of application:
**05.01.2005 Bulletin 2005/01**

(73) Proprietor: **Ricoh Company, Ltd.**
**Tokyo 143-8555 (JP)**

(72) Inventors:
• **Takahashi, Hiroshi,**
**c/o Ricoh Company, Ltd.**
**Tokyo 143-8555 (JP)**
• **Yamaguchi, Katsumi,**
**c/o Ricoh Company, Ltd.**
**Tokyo 143-8555 (JP)**

(74) Representative: **Schwabe - Sandmair - Marx**
**Stuntzstrasse 16**
**81677 München (DE)**

(56) References cited:
**EP-A- 0 370 271       US-A- 5 901 275**
**US-B1- 6 346 993**

• **WADLE H: "An Introduction to Screening Technology" [Online] May 2002 (2002-05), HEIDELBERGER DRUCKMASCHINEN , HEIDELBERG , XP002293997 Retrieved from the Internet: URL:http://web.archive.org/web/ 20030703002 152/www.heidelberg.com/hq/eng/ Images/16_13 287.pdf> [retrieved on 2004-08-25] * page 23 - page 37; figures 4,7,26,28,30,34,36,58 ***
• **DELABASTITA P A: "RECENT TRENDS IN DIGITAL HALFTONING" PROCEEDINGS OF THE SPIE, SPIE, BELLINGHAM, VA, US, vol. 2949, 7 October 1996 (1996-10-07), pages 318-331, XP009006052 ISSN: 0277-786X**
• **"The Print Engine" SEYBOLD REPORT ON PUBLISHING SYSTEMS, [Online] vol. 23, no. 4, 11 October 1993 (1993-10-11), Retrieved from the Internet: URL:http://web.archive.org/web/ 20020707035 141/http: //www.seyboldreports.com/SRPS/fre e/ 0ps23/P2304001.HTM> [retrieved on 2004-08-27]**

EP 1 494 458 B1

**Description**

BACKGROUND OF THE INVENTION

1) Field of the Invention

The present invention relates to a method and an apparatus for forming a multitone color image from image data.

2) Description of the Related Art

An image forming method relating to a middle tone processing is currently in use. The middle tone processing is adopted in image forming apparatuses such as a laser printer, a digital copying machine, a color laser printer, and a digital color copying machine, a display device, and the like.

A dither method is mostly used as the middle tone processing. According to the dither method, even a binary printer or the like can express tones and colors. In the dither method, halftone dot dither that forms dots is general. As the dither method, dot concentration type dither in which dots are arranged in a concentrated manner, and dot dispersion type dither in which dots are arranged in a dispersed manner are known.

The dot concentration type dither method has its feature in that stability of images is good in an electrophotographic printer or the like and a tone property is good but aliasing easily occurs at edges of characters and images. On the contrary, the dot dispersion type dither method has its feature in that resolution is high but tone property and stability is deteriorated and irregular density such as banding easily occurs.

As a processing in the dither method, for example, a processing for forming a line image for multinary writing for forming a slanted-line image is known. In this process, a plurality of minute dots is formed for one pixel datum, and the minute dots are concentrated so that dots are formed in a slanted direction with respect to a recording medium.

A processing for thickening multinary lines for forming a slanted-line image uniformly and sequentially from above is also known. A processing for increasing minute dots by an increase in density, and similarly increasing minute dots of residual pixels after increasing the density of pixels to a maximum value so as to express color density is also known (see, for example, Japanese Patent Application Laid-Open No. S61-214662).

There is also known a technique that makes screen angle directions of the lines different by 90 degrees in each color plate, and reduces color unevenness or the like caused by overlapping of the color plates (see, for example, Japanese Patent Application Laid-Open No. H10-145626, and Japanese Patent Application Laid-Open No. H10-257337).

An image forming method in which a line basis in a predetermined direction is formed by a dither matrix, the dots are ON until a saturation value is obtained according to the increase in density, and dots which are adjacent to one another in the row direction are ON is disclosed (see, for example, Japanese Patent Application Laid-Open No. 2001-86336). Further, an image forming method in which a dot image of a low density portion grows into a line image of a high density portion is also disclosed (see, for example, Japanese Patent Application Laid-Open No. 2002-118746).

In these conventional image forming methods, however, for example, four imaging stations are used so as to form color images with Yellow, Magenta, Cyan, and Black (YMCK) and sequentially transfer them onto transfer paper. In this case, a deviation of about dozens microns locally occurs in one print. When four imaging stations are used in such a manner, displacement of the YMCK images easily occurs.

When one-drive type image forming apparatus having one imaging unit is used so as to form color images, four color images are formed by one imaging system. In the one-drive type image forming apparatus, a displacement amount of the colors can be suppressed further than using four imaging stations. The displacement amount should be reduced further.

When color images are formed, the dots with respective colors are arranged with periodicity. In the image, the dots with respective colors are superposed with each other. When the dot displacement locally occurs in the respective colors including YMCK, therefore, if images with the respective colors are superposed with each other, the dot superposed status differs in respective portions. For example, a portion where toner dots are superposed is observed as a blurred color. Further, a portion where the dots with the respective colors are not superposed and are arranged separately is observed to have a different color from that of the portion where the dots with the respective colors are arranged in a superposed manner.

The displacement of the dots having respective colors causes a phenomenon of coloring which is a color change on a portion having uniform color density.

In order to solve such a problem, a method of shifting a direction of halftone of respective colors including YMCK is known. For example, a method of differing screen angles by 30 degrees in printing halftone using screen angle dither is known. In this method, however, there is a problem that a specific texture represented by a rosette pattern of printing (pattern other than an original image) is generated due to a screen angle.

In the printing halftone using the screen angle dither, for example, before lines are formed on a highlight portion, an image is formed by isolated dots and halftone. The concentration of these dots has an image period in a direction perpendicular to the lines. For this reason, there is a problem that when two color plates whose screen angle difference is 90 degrees are superposed with each other, color moire is generated due to displacement of the plates.

US-5,901,275 A discloses a method for rendering monochrome or colored continuous tone images by a system having restricted continuous tone rendering capabilities, such as electrographic printers capable of printing more than two density levels on each addressable micro dot. A method for preferred halftone dot growth is described, starting from isolated dots arranged along base lines and auxiliary lines, evolving to high density lines along the base lines and approximating full continuous tone rendition for high density regions. Preferred arrangements for the orientation, spacing and absolute location of the base lines and auxiliary lines are disclosed and a method to generate preferred arrangements. A moire free combination of three halftone images is described for the reproduction of color images. A method to select a restricted set of energy levels to obtain linear reflectance response is disclosed. Halftone cells are arranged in supercells to improve the density resolution of the system.

## SUMMARY OF THE INVENTION

The invention is defined by the subject-matter of the independent claims. The dependent claims are directed to advantageous embodiments.

## ADVANTAGES OF THE INVENTION

Advantageously, a color image forming apparatus that forms a multitone image from image data includes a converter that converts multitone image data of respective colors into binary or multinary quantized image data, a screen forming unit that forms at least three screens representing different colors based on the quantized image data, and a superposing unit that superposes the screens formed by the screen forming unit to form a color image. The screen forming unit forms the screens such that a minimum angle difference among angle differences of predetermined three screens is larger than 45 degrees when the superposing unit superposes the screens.

Advantageously, the color image forming apparatus that forms a multitone image from image data includes a converter that converts multitone image data of respective colors into binary or multinary quantized image data, a screen forming unit that forms a plurality of screens representing different colors based on the quantized image data, and a superposing unit that superposes the screens formed by the screen forming unit to form a color image. The screen forming unit forms the screens such that any two line bases among line bases of the screens are asymmetrical with respect to at least one of a main-scanning direction and a sub-scanning direction where an exposing light source executes optically writes the screens based on the quantized image data.

Advantageously, the color image forming apparatus that forms a multitone image from image data includes a converter that converts multitone image data of respective colors into binary or multinary quantized image data, a screen forming unit that forms at least three screens representing different colors based on the quantized image data, and a superposing unit that superposes the screens formed by the screen forming unit to form a color image. The screen forming unit forms the screens such that a maximum interference period among interference periods caused by superposition of predetermined three screens is smaller than 1/0.8 times a period of the screens when the superposing unit superposes the at least three screens.

Advantageously, the color image forming apparatus that forms a multitone image from image data includes a converter that converts multitone image data of respective colors into binary or multinary quantized image data, a screen forming unit that forms at least three screens representing different colors based on the quantized image data, and a superposing unit that superposes the screens formed by the screen forming unit to form a color image. The screen forming unit forms the screens such that minimum number of lines on a screen with interference caused by superposition of predetermined three screens is larger than 0.8 times the number of lines on the three screens when the superposing unit superposes the screens.

Advantageously, the color image forming apparatus that forms a multitone image from image data includes a converter that converts multitone image data of respective colors into binary or multinary quantized image data, a screen forming unit that forms three screens representing different three colors based on the quantized image data, and a superposing unit that superposes the three screens formed by the screen forming unit to form a color image. The screen forming unit forms the screens such that a minimum angle difference among angle differences of the three screens is larger than 45 degrees when the superposing unit superposes the screens.

Advantageously, the color image forming apparatus that forms a multitone image from image data includes a converter that converts multitone image data of respective colors into binary or multinary quantized image data, a screen forming unit that forms three screens representing different three colors based on the quantized image data, and a superposing unit that superposes the three screens formed by the screen forming unit to form a color image. The screen forming unit forms the screens such that a maximum interference period among interference periods caused when the superposing unit superposes the screens is smaller than 1/0.8 times a period of the screen.

Advantageously, the color image forming apparatus that forms a multitone image from image data includes a converter that converts multitone image data of respective colors into binary or multinary quantized image data, a screen forming unit that forms three screens representing different three colors based on the quantized image data, and a superposing unit that superposes the three screens formed by the screen forming unit to form a color image. The screen forming unit forms the screens such that minimum number of lines on an interference screen caused when the superposing unit superposes the screens is larger than about 0.8 times number of lines on the three screens.

Advantageously, the color image forming method to form a multitone image from image data includes steps of converting multitone image data of respective colors into binary or multinary quantized image data, forming at least three screens representing different colors based on the quantized image data, and superposing the screens formed by the screen forming unit to form a color image. The forming step includes forming the screens such that a minimum angle difference among angle differences of predetermined three screens is larger than 45 degrees when the superposing unit superposes the screens.

Advantageously, the color image forming method to form a multitone image from image data includes steps of converting multitone image data of respective colors into binary or multinary quantized image data, forming a plurality of screens representing different colors based on the quantized image data, and superposing the screens formed by the screen forming unit to form a color image. The forming step includes forming the screens such that any two line bases among line bases of the screens are asymmetrical with respect to at least one of a main-scanning direction and a sub-scanning direction where an exposing light source executes optically writes the screens based on the quantized image data.

Advantageously, the color image forming method to form a multitone image from image data includes steps of converting multitone image data of respective colors into binary or multinary quantized image data, forming at least three screens representing different colors based on the quantized image data, and superposing the screens formed by the screen forming unit to form a color image. The forming step includes forming the screens such that a maximum interference period among interference periods caused by superposition of predetermined three screens is smaller than 1/0.8 times a period of the screens when the superposing unit superposes the at least three screens.

Advantageously, the color image forming method to form a multitone image from image data includes steps of converting multitone image data of respective colors into binary or multinary quantized image data, forming at least three screens representing different colors based on the quantized image data, and superposing the screens formed by the screen forming unit to form a color image. The forming step includes forming the screens such that minimum number of lines on a screen with interference caused by superposition of predetermined three screens is larger than 0.8 times the number of lines on the three screens when the superposing unit superposes the screens.

Advantageously, the color image forming method to form a multitone image from image data includes steps of converting multitone image data of respective colors into binary or multinary quantized image data, forming three screens representing different three colors based on the quantized image data, and superposing the three screens formed by the screen forming unit to form a color image. The forming step includes forming the screens such that a minimum angle difference among angle differences of the three screens is larger than 45 degrees when the superposing unit superposes the screens.

Advantageously, the color image forming method to form a multitone image from image data includes steps of converting multitone image data of respective colors into binary or multinary quantized image data, forming three screens representing different three colors based on the quantized image data, and superposing the three screens formed by the screen forming unit to form a color image. The forming step includes forming the screens such that a maximum interference period among interference periods caused when the superposing unit superposes the screens is smaller than 1/0.8 times a period of the screen.

Advantageously, the color image forming method to form a multitone image from image data includes steps of converting multitone image data of respective colors into binary or multinary quantized image data, forming three screens representing different three colors based on the quantized image data, and superposing the three screens formed by the screen forming unit to form a color image. The forming step includes forming the screens such that minimum number of lines on an interference screen caused when the superposing unit superposes the screens is larger than about 0.8 times number of lines on the three screens.

Other features and advantages of the present invention are specifically set forth in or will become apparent from the following detailed description of the invention when read in conjunction with the accompanying drawings.

BRIEF DESCRIPTION OF THE DRAWINGS

Fig. 1 is a block diagram of a configuration of an electrophotographic color printer 1 according to a first embodiment;

Fig. 2 depicts an arrangement of screen angles of a color image formed by a middle tone processing by a middle tone processor 116;

Fig. 3 depicts a basis of an image formed by the constitution of the screen angles in Fig. 2;

Fig. 4 depicts a specification of screen angle dither shown in Figs. 2 and 3;

Figs. 5A to 5C depict a basic matrix, a pixel order, and cutting-out of dither matrix of a black plate;

Figs. 6A to 6D depict transfer characteristics of multinary dither represented by the pixel order;

Figs. 7A to 7C depict a basic matrix, a pixel order, and cutting out of dither matrix of a cyan plate;

Figs. 8A to 8C depict a basic matrix, a pixel order, and cutting out of dither matrix of a magenta plate;

Figs. 9A to 9C depict a basic matrix, a pixel order, and cutting out of dither matrix of an yellow plate;

Fig. 10 depicts an interference period of two line screens when their screen periods are equal to each other;

Fig. 11 depicts a superposed image when an angle difference between the two line screens is 30 degrees;

Fig. 12 depicts a superposed image when the angle difference between the two line screens is 50 degrees;

Fig. 13 depicts a superposed image when the angle difference of the line screens is 60 degrees;

Fig. 14 depicts a relationship between an image frequency representing a basis of an output image and appearance of a texture as a pattern of the image constitution;

Fig. 15 is a sectional view of a schematic constitution of the electrophotographic color printer 1 according to the first embodiment;

Figs. 16A to 16C depict overlapping of different two-color dots when images are formed and arranged by halftone dither;

Fig. 17 is a typical diagram of a growing state of a laser diode (LD) pulse in a case of multinary writing;

Fig. 18 depicts a specification of dither matrix in a multi-beam;

Fig. 19 is a typical diagram of a relationship between screen angles of respective colors based on the specification of the dither matrix shown in Fig. 18;

Fig. 20 depicts the screen angles of an output image;

Fig. 21 depicts the screen angles of an output image;

Figs. 22A and 22B depict black screens in Fig. 20 formed by two-beam writing;

Figs. 23A and 23B depict magenta screens in Fig. 20;

Fig. 24 depicts another example of the specification of the dither matrix;

Fig. 25 depicts a constitution of the screen angles in the specification of the dither matrix shown in Fig. 24;

Fig. 26 depicts a constitution of a multi-beam;

Fig. 27 is an explanatory diagram of a fluctuation of a vertical line;

Figs. 28A to 28D depict other setting examples of the screen angles;

Fig. 29 depicts a constitution of the screen angles when a color image is formed by using three colors including cyan, magenta, and yellow; and

Fig. 30 depicts a dither converting circuit 300.

DETAILED DESCRIPTION

Exemplary embodiments of a method and an apparatus for forming a color image according to the present invention will be explained in detail below with reference to the accompanying drawings.

In the present embodiments, an electrophotographic color printer that forms color images using four colors including YMCK is used as an image forming apparatus.

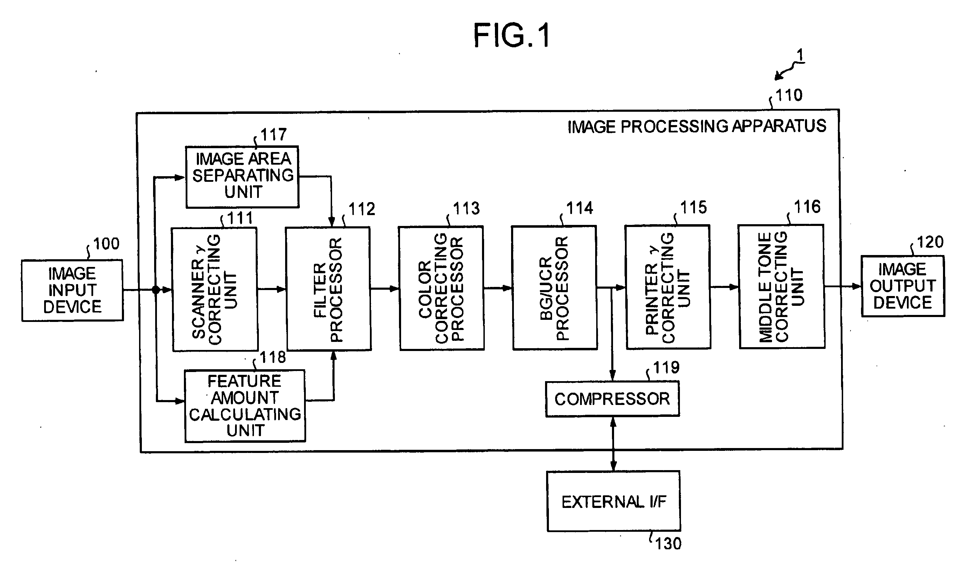

Fig. 1 is a block diagram of a configuration of an electrophotographic color printer 1 as the image processing apparatus according to a first embodiment of the present invention. The electrophotographic color printer 1 includes an image input device 100, an image processing device 110, an image output device 120, and an external interface (I/F) 130. The input device 100 is concretely a scanner. The image output device 120 is concretely a laser printer.

The image processing device 110 includes a scanner γ correcting unit 111, a filter processor 112, a color correcting processor 113, a black generation/under color removal (BG/UCR) processor 114, a printer γ correcting unit 115, and a middle tone processor 116.

The scanner γ correcting unit 111 converts an image signal rgb optically read and input by the image input device 100 into image data of 8 bits (0 to 255) having red, green, and blue (RGB) of density linear or brightness linear. The scanner γ correcting unit 111 normally executes a correcting processing using a look-up table (LUT). The correcting processing is not limited to this, and slewing may be used.

An image area separating unit 117 separates the image data received from the input device 100 into a black character area, a color character area, and another area. A feature amount calculator 118 calculates a feature amount of a character edge or the like from the image data received from the input device 100. The filter processor 112 converts the image data from the scanner γ correcting unit 111 into an image with predetermined spatial frequency characteristic.

The color correcting processor 113 converts the image data output from the filter processor 112 into a CMY signal. The BG/UCR processor 114 creates a K signal as an ink component from the image data output from the color correcting processor 113 (BG), and removes a ground color from the CMY signal (UCR). The printer γ correcting unit 115 converts the image data output from the BG/UCR processor 114 so that a desired density characteristic is obtained.

The middle tone processor 116 converts the image data received from the printer γ correcting unit 115 into multinary or binary image data. The middle tone processor 116 may execute the middle tone processing according to either one of a dither method and an error dispersing method. The middle tone processor 116 transfers the converted image data to the image output device 120.

The middle tone processor 116 quantizes multinary data of Y, M, C, and K according to the middle tone processing, and modulates the quantized data into multinary data or binary data of 8 bits for laser writing. The laser writing multivalue can be changed according to specifications of printers and copying machines that form images. At this time, the laser writing multivalue is changed based on a signal which is obtained when a determination is made by an image area separating signal whether a document image has characters or non-characters in the following manner. When the character area is present, one-dot multinary writing or dither with many lines for reproducing the area with high resolution is used, and when the non-character area is present, dither with less lines for reproducing the area stably with high tone is used.

The constitution of an image processing by the color printer is not shown, but the similar middle tone processing is executed by a printer driver or a controller.

A compressor 119 compresses and outputs the image data output from the BG/UCR processor 114 to the external I/F 130.

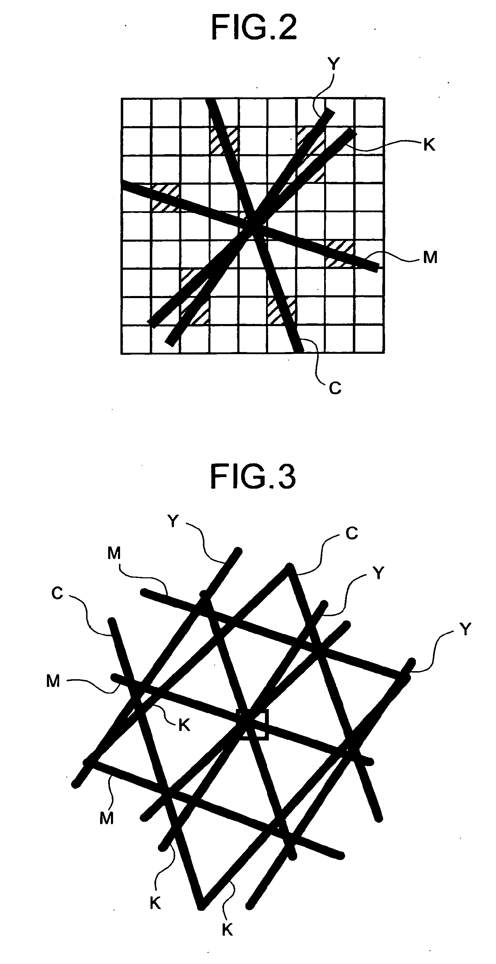

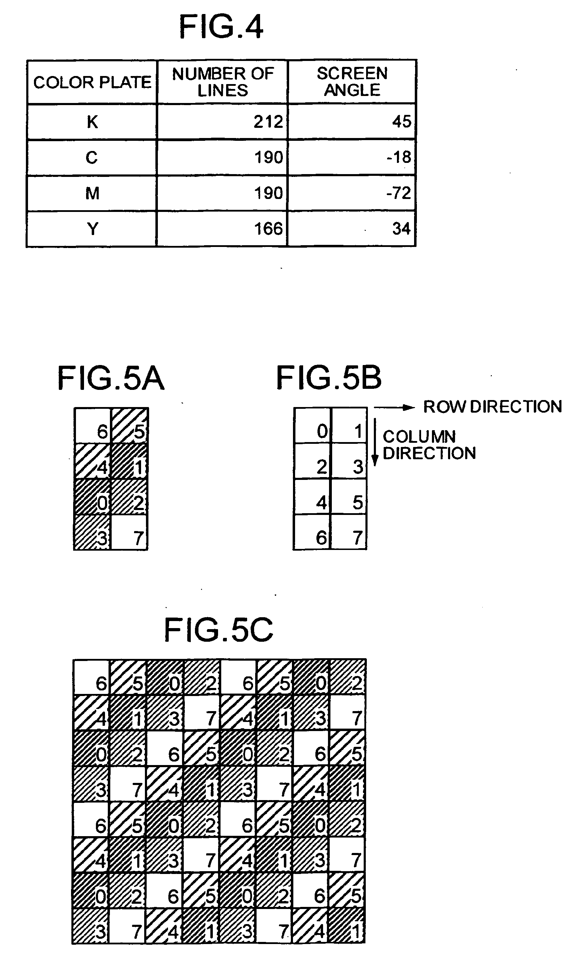

Fig. 2 depicts screen angles of a color image formed by the middle tone processing in the middle tone processor 116. Fig. 3 depicts a basis of an image formed by the constitution of the screen angles in Fig. 2. Figs. 2 and 3 depict the screen angles when multinary writing is executed with writing resolution of 600 dots per inch. Fig. 4 depicts a specification of the screen angle dither shown in Figs. 2 and 3.

The number of lines on the black plate is 212 lines per inch. When a 12 o'clock direction is 0 degree and a clockwise direction is a plus direction, the screen angle of the black plate, namely, the line basis is set in a direction of 45 degrees. The number of lines on the cyan plate and the magenta plate is 190 lines per inch. The screen angles of the cyan plate and the magenta plate, namely, line bases are set in directions of -18 degree and -72 degree, respectively.

Since all color screens are line bases, the lines extend also to directions different by 180 degrees from the above screen angle directions. That is, the line bases of the three screens are formed within 180 degrees. More specifically, a difference in the screen angles between the black plate and the cyan plate is 63 degrees, and a difference in the screen angles between the cyan plate and the magenta plate is 54 degrees, and a difference in the screen angles between the magenta plate and the black plate is 63 degrees. A difference in the screen angles between the yellow plate and the cyan plate is 52 degrees, and an angle difference between the yellow plate and the magenta plate is 74 degrees.

In such a manner, the lines have two directional components in the image space, and any two of the color plate screens in the black plate, the cyan plate, and the magenta plate are combined so that the screen angles are formed. The differences in the screen angles are set to larger than 45 degrees. When the difference in the screen angles are set to larger than 45 degrees, interference which occurs due to overlapping of the color plate screens can be reduced.

In the image formed in the present embodiment, an angle difference between the yellow plate and the black plate is 11 degrees which is smaller than 45 degrees. The interference between the yellow plate and the other color plates and the interference between the black plate and the other color plates are less noticeable for human eyes compared with combination of other color plates. When only the angle difference between the line bases of the screens which generate the texture noticeable for human eyes is set to smaller than 45 degrees, the differences in the screen angles in the combination of the screens representing the residual colors can be set equal to or more than 45 degrees. As a result, the interference that causes the texture noticeable for human eyes can be reduced.

In the present embodiment, the differences in the screen angles in the combination of any two color plates in the cyan plate, the magenta plate, and the yellow plate, in which the interference between the color plates becomes a problem, are set equal to or more than 45 degrees. As a result, a high-quality image with less texture can be formed.

In the present embodiment, the difference in the screen angles between the yellow plate and the magenta plate has a maximum value, but as another example, the difference in the screen angles between the cyan plate and the magenta plate may have a maximum value. When the difference in the screen angles between the color plates which form texture noticeable for human eyes is set to be large, a higher-quality image can be formed.

Fig. 5A depicts a basic matrix to be used when the screen of the black plate shown in Fig. 2 is formed. Fig. 5B depicts a pixel order to be used when image data are converted by using the basic matrix. Fig. 5C depicts the dither matrix.

The basic matrix includes a pixel group of 2x8 pixels, and the pixel order is allocated to the respective pixels so that data are generated from image highlight. Data are generated from the pixels in the order of increasing values allocated to the pixels. Further, the pixel orders are equal with each other in a row direction. For example, 0 and 1 are the equal orders, and 2 and 3 are the equal orders. That is, an image is generated simultaneously in the image areas with uniform density.

The values in the respective pixels are compared with corresponding values in the image data, so that the image data are converted into multinary or binary data. When the image data are larger, the dots are ON, but on the contrary, when the image data are smaller or equal with the values in the pixels, the dots are OFF. As a result, the dots with smaller values start to be filled up successively in the order of increasing density on the uniform density data. As a result, as shown in Fig. 5C, in the dither matrix, the pixels of the line basis grow to become thick. In such a manner, the line screen is formed starting from the barycenter of the screen based on the basic matrix.

Repeated matrices in the image are cut out into a rectangular shape for the image processing. The cut-out repeated matrices are arranged as a dither translation table in a printer controller of the electrophotographic color printer 1 or a printer driver such as a personal computer (PC) connected with the printer controller.

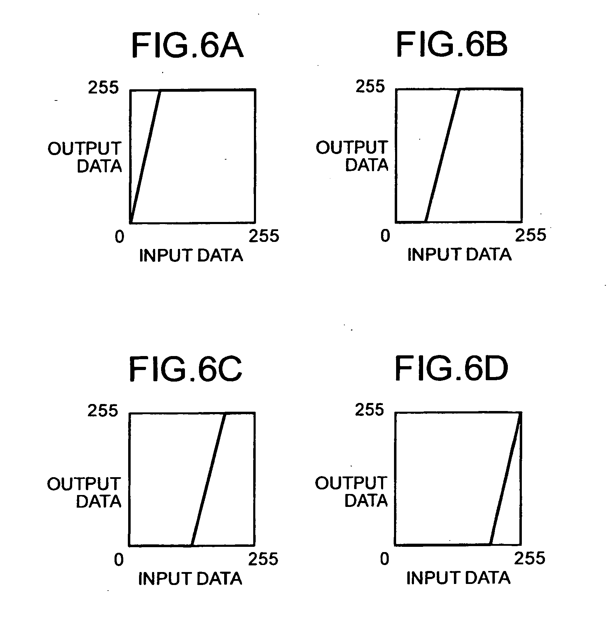

Figs. 6A to 6D depict multinary dither transfer characteristics represented by the pixel order. The horizontal axes in Figs. 6A to 6D represent input data, and the vertical axes represent output data.

Pixels 0 and 1 on the top row, pixels 2 and 3 on the second row, pixels 4 and 5 on the third row, and pixels 6 and 7 on the bottom row of the pixel order on the black plate shown in Fig. 5B convert the input data into output data which are determined by a relational expression shown in the graphs of Figs. 6A, 6B, 6C, and 6D.

Specifically, a section including 0 to 255 of the input data is divided by the number of rows of the pixel order. Since the pixel order shown in Fig. 5B has four rows, the input data 0 to 255 are divided into four. On the pixels 0 and 1 on the top row shown in Fig. 5B, the output pixel data increase as to be saturated with respect to the input data 0 to 63 as shown in Fig. 6A. Similarly, on the pixels 2 and 3 on the second row of the pixel order, the pixels 4 and 5 on the third row, and the pixels 6 and 7 on the bottom row shown in Fig. 5B, the output pixel data increase so as to be saturated with respect to the input data 64 to 127, 128 to 191, and 192 to 255, respectively as shown in Figs. 6B, 6C, and 6D.

As a result, data are generated from pixels whose pixel order is small in Fig. 5B, and as the input image data increase, the pixels of the line basis grow to be thickened as shown in the matrix diagram of Fig. 5C. In the present embodiment, since the image data are converted into quantized data with at least three tones, the line image can be formed smoothly.

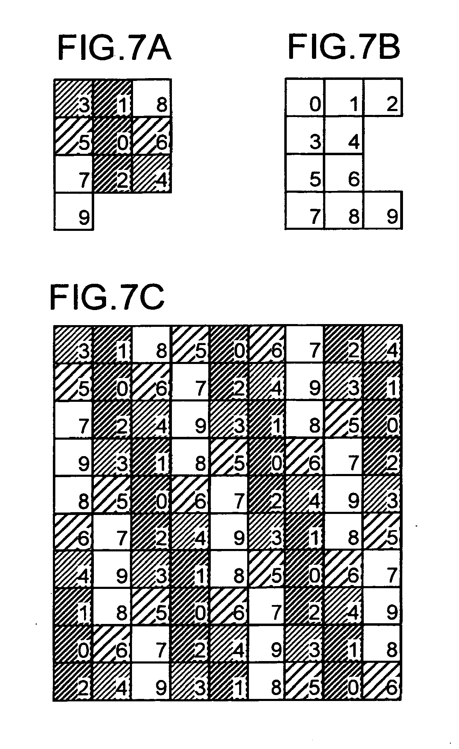

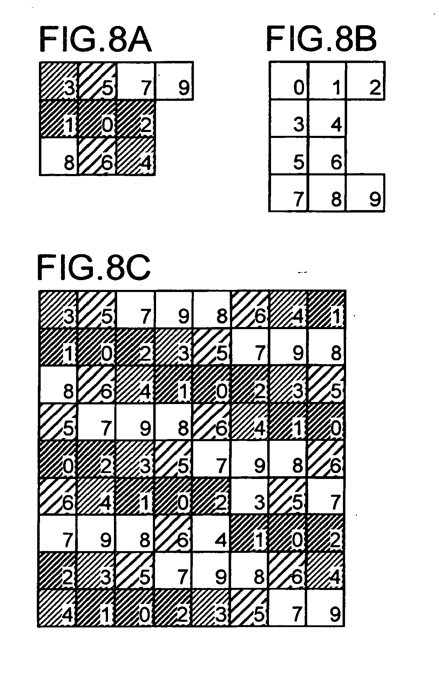

Figs. 7A to 9C depict basic matrices, pixel orders, and cutting out of the dither matrix where the basic matrices are arranged on the cyan plate, the magenta plate, and the yellow plate. Figs. 7A, 8A, and 9A depict the basic matrix of each color plate. Figs. 7B, 8B, and 9B depict the pixel order of each color plate. Further, Figs. 7C, 8C, and 9C depict cutting out of the dither matrix of each color plate.

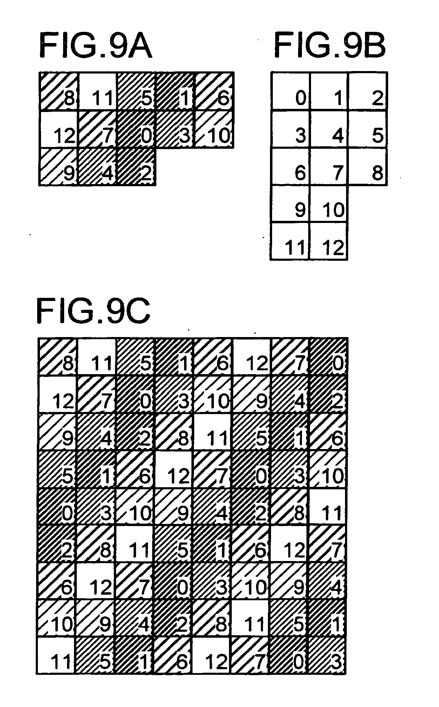

On any of the color plates, the image data are converted based on the transfer characteristics similar to the transfer characteristic of the black plate explained with reference to Figs. 6A to 6D. As shown in Fig. 9B, the input data of the multinary dither transfer characteristic on the yellow plate are divided into five sections. That is, a slant of the transfer characteristic on the yellow plate is set to be larger than those of the other color plates.

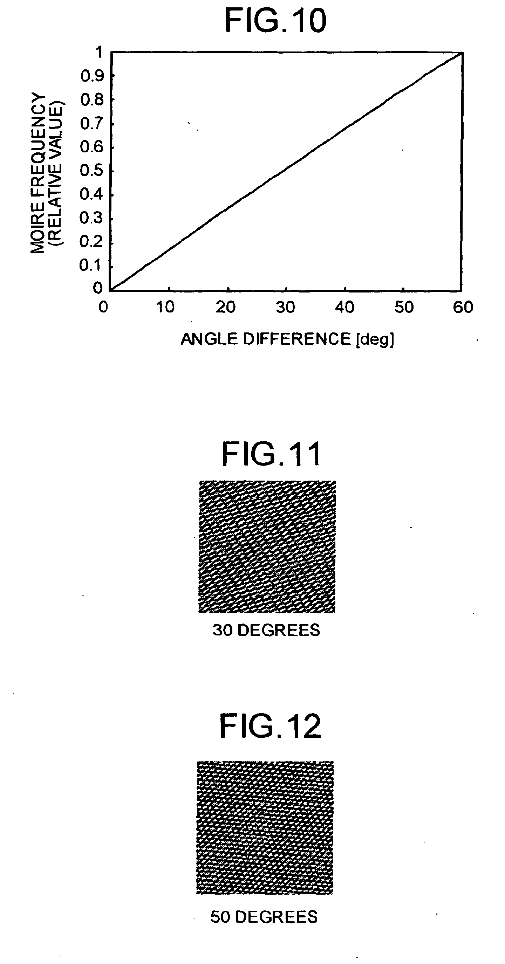

Fig. 10 depicts an interference period of two line screens having equal screen periods. A horizontal axis of the graph in Fig. 10 represents an angle difference between the two line screens, and a vertical axis represents a relative value of an image frequency generated due to an interference in each angle difference. As shown in Fig. 10, a correlation is such that as the angle difference increases, the interference frequency becomes higher. When the respective color screens with periodicity are superposed with each other in such a manner, a new periodic pattern which depends on the difference in the screen angles is generated due to the interference between the superposed screens as shown in Fig. 10.

Its principle is expressed as follows. When overlapping of two waves, where their amplitude is A, their frequency is f, and their directions are different from each other ($\pm\theta$ with respect to the x direction) is considered, the principle is expressed by the following equation

$$\xi=A\cos[2\pi f(x\cos\theta+y\sin\theta)]+A\cos[2\pi f(x\cos\theta-y\sin\theta)]$$

$$=2A\cos(2\pi fy\sin\theta)\cos(2\pi fx\cos\theta). \tag{1}$$

Rotation of a coordinate ($\theta$ rotation: $(x,y) \to (X,Y)$) is, here, expressed by the following equations

$$X=x\cos\theta+y\sin\theta$$

$$\tag{2}$$

$$Y=-x\sin\theta+y\cos\theta. \qquad (3)$$

That is, a wave with a frequency $f\cos\theta$, whose amplitude is a frequency $f\sin\theta$ and which oscillates in a direction (y direction) vertical to the x direction, is formed. As to a strength fluctuation in this case, an interference occurs with a frequency $2f\sin\theta$ in the y direction.

According to the equation (1), when the difference in the screen angles is 30 degrees, a relative value of the interference frequency with respect to the image frequency is about 0.5. 100 textures are, therefore, generated at the interference of the two screens having about 200 lines as shown in Fig. 4. Meanwhile, when the angle difference is 60 degrees, the image frequency becomes 1, and the interference period becomes approximately equal with that in the status where the number of the basic lines is 200. A noticeable texture with low frequency does not appear. That is, as the angle difference is set larger, the interference wave has a higher frequency, and thus a texture due to the screen interference is hard to be noticeable as mentioned later.

When the difference in the screen angles is 45 degrees, the relative value of the interference frequency becomes about 0.7 and 140 textures are generated due to the interference of the two screens having about 200 lines. When the screens having about 200 lines are superposed with each other, therefore, it is desirable that a screen having about 140 or more lines on the interference screen is formed.

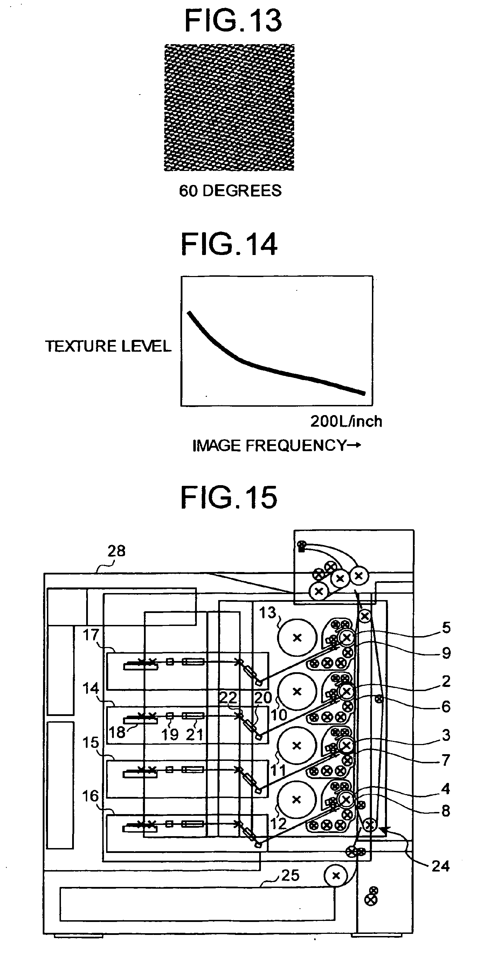

Fig. 11 depicts an superposed image when the angle difference between the two line screens is 30 degrees. Similarly, Figs. 12 and 13 depict superposed images when the angle difference between the two line screens is 50 degrees and 60 degrees. As is clear from the images in Figs. 11 to 13, when the angle difference between the line screens is small, a texture with low frequency in a direction perpendicular to the two lines is observed noticeably.

Fig. 14 is a graph for explaining a relationship between the image frequency representing the basis of the output image and appearance of the texture as a pattern of the image constitution. The image frequency includes basic waves having the number of lines of the cyan, the magenta, the yellow, and the black screens forming a color image, and an interference wave having a composite wave of the basic waves. As shown in the graph of Fig. 14, a texture level is determined by a viewing distance and an eye characteristic and is inversely proportional to the image frequency. That is, the texture with high frequency is difficult to be sensed, and when the image has a low frequency, the texture becomes noticeable. As a result, the texture is recognized as image deterioration.

On the contrary, in the image formed by the electrophotographic color printer 1 according to the present embodiment, the angle differences between the screens other than the line screens of the yellow plate and the black plate is set to larger than 45 degrees. That is, the image frequency is set to smaller than 1/0.8. For this reason, textures which are noticeable for human eyes can be reduced.

The interference due to the combination of the yellow plate and the black plate is hard to be noticeable for human eyes. In the present embodiment, therefore, only the angle difference between the screens of the yellow plate and the black plate, at which the interference is hard to be noticeable for human eyes, is set to smaller than 45 degrees. As a result, the angle differences between screens of the other color plates are set to comparatively larger angles which is equal to or more than 45 degrees.

Fig. 15 is a sectional view of the schematic configuration of the electrophotographic color printer 1 according to the first embodiment. The electrophotographic color printer 1 is a 4-drum tandem engine type image forming apparatus in which the four color images are formed by independent imaging systems, and these images are synthesized.

As shown in Fig. 15, the respective four colors (YMCK) imaging systems of the electrophotographic color printer 1 have small-diameter organic photo conductor (OPC) drums 2 (yellow), 3 (magenta), 4 (cyan), and 5 (black) for forming latent images, respectively. A charging roller, a developing unit, a cleaning unit, an electricity-neutralizing unit, and the like are arranged from an upper stream side of the imaging so as to surround the OPC drums 2 to 5, and they compose imaging blocks 6, 7, 8, and 9. Toner bottle units 10, 11, 12, and 13 that supply YMCK toners are arranged beside the imaging blocks 6 to 9, respectively.

Independent optical writing units 14, 15, 16, and 17 for YMCK are arranged on the left sides of the toner bottle units 10 to 13, respectively. For example, the optical writing unit 14 has optical parts such as an LD light source 18, a collimating lens 19, and an f$\theta$ lens 20, a polygon mirror 21, a folding mirror 22 and the like. A writing optical path is led to a portion which is charged by the charging roller of the OPC drum 5. The optical writing unit 14 executes optical writing based on the image data corresponding to black. The other optical writing units 15 to 17 have the similar configuration, and optical writing is executed based on the image data of yellow, magenta, and cyan therein.

A transfer belt unit 24 that superposes four color toner images imaged by the OPC drums 2 to 5 on a transfer belt 23 is arranged on the right side of the imaging blocks 6 to 9 so as to contact with the OPC drums 2 to 5. While transfer paper, not shown, is being held, the toner images are transferred onto the transfer paper.

A paper feed tray 25 that stores transfer papers therein is provided on a lower portion of the electrophotographic color printer 1. A pickup roller 26 sends out pieces of the transfer paper one by one to a horizontal direction. The transfer paper is carried to a vertical direction where the imaging systems are present. The toner images which are electrostatically adsorbed and held on the transfer belt 23 are transferred onto the transfer paper. The paper after the transfer is carried to a fixing unit 27 provided on the upper portion of the electrophotographic color printer 1. The fixing unit 27 fixes toner onto the transfer paper using heat and pressure. The paper is discharged onto a paper discharge tray 28 on the upper portion of the electrophotographic color printer 1 with the image surface of the paper facing down.

The electrophotographic color printer 1 of the present embodiment adopts the image forming system such that YMCK images are formed individually by the four imaging stations as mentioned above so as to be transferred onto the transfer paper. For this reason, this apparatus has excellent printing speed.

Since the imaging systems are different from one another, the positions of the YMCK images occasionally deviate by dozens microns due to a position error of the optical systems and the constitute, a shape error of the imaging drums, and the like. Even when the positions are adjusted accurately, the optical parts occasionally displace due to environment, a change with time, and the like. Local displacement of dozens microns cannot be occasionally avoided on one print according to the accuracy of the parts.

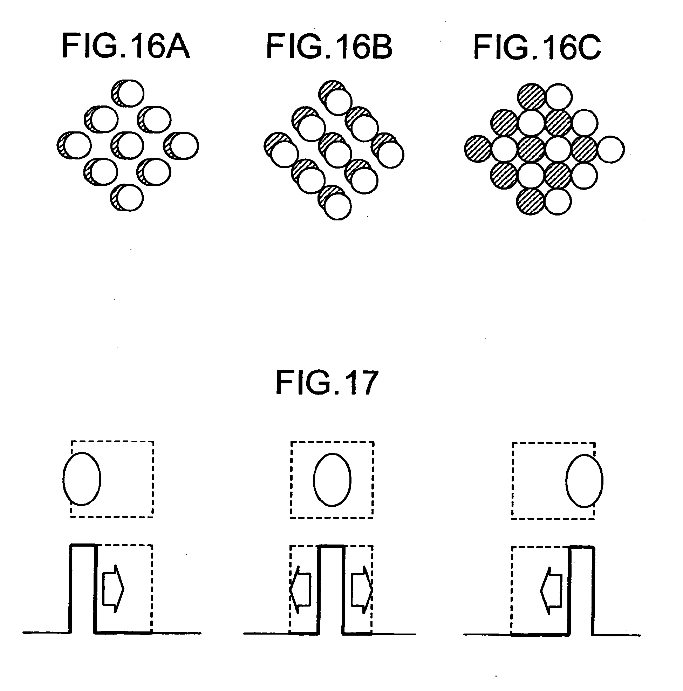

Figs. 16A to 16C depict overlapping of two colors dots when an image is formed by the halftone dither. More concretely, they depict overlapping of the magenta dots and the cyan dots. Magenta dots 310 and cyan dots 320 are arranged in an approximately superposed manner as shown in Fig. 16A. In Fig. 16B, magenta dots 312 and cyan dots 322 are arranged in a partially superposed manner. In Fig. 16C, magenta dots 314 and cyan dots 324 are arranged so as not to overlap with each other.

In the color image formed by the electrophotographic color printer 1 according to the present embodiment, a portion where the dots are approximately superposed with each other as shown in Fig. 16A, a portion where the dots are partially superposed with each other as shown in Fig. 16B, and a portion where the dots are not superposed with each other as shown in Fig. 16C are present in one image in a mixed manner. For this reason, in the color image, murky colors are observed on the portion where the dots are approximately superposed as shown in Fig. 16A and the portion where the dots are partially superposed as shown in Fig. 16B. On the other hand, different colors are observed on the portion where the dots are arranged separately as shown in Fig. 16C even under the same data condition.

As a countermeasure, in the electrophotographic color printer 1 of the present embodiment, the angle differences between the screens formed by the line bases of the three screens representing main three colors are set to equal to or more than 45 degrees. As a result, color unevenness and murky colors which occur due to displacement can be reduced.

Fig. 17 is a typical diagram of growing statuses of a laser diode (LD) pulse in a case of multinary writing. With reference to Fig. 17, a light modulating method for the LD in a case of the multinary writing is explained. In the electrophotographic color printer 1 of the present embodiment, multinary writing of 8 bits per pixel is enabled by modulation of width of the LD. A writing pulse can be generated from left, right, and center positions of the pixels. In the pulse width modulation, dot writing positions in the main-scanning direction can be controlled. Further, the lines can be formed smoothly and stably by the pulse width modulation.

In the dither of the cyan plate shown in Fig. 4, the pixels colored with cyan are the barycenter for the formation of the lines, and the pulse is grown in right and left directions with respect to the center of the pulse width shown in Fig. 17. A pulse is generated from the left in the pixels on the cyan pixels, and a pulse is generated from the right in the pixels below the cyan pixels. Further, since the dots are already present on pixels on the left side of the pixels colored with cyan, a left pulse is grown on the pixels on the right side of the cyan pixels. Since the dots are present on the pixels on the right side of the cyan pixels, a right pulse is grown on the pixels on the left side of the cyan pixel. When the pulse is grown sequentially in the main-scanning direction, line writing exposure is concentrated so that a stable image is formed.

When the line screen is formed starting from the barycenter of the screen, generation of a texture is prevented, and a more stable image can be formed. Particularly in the stable image with high contrast, a texture as a basis of the image is mostly noticeable, but in this case, a more stable image can be formed.

The electrophotographic color printer 1 according to a second embodiment is explained below. The electrophotographic color printer 1 according to this embodiment writes an image using a multi-beam.

As to the multi-beam, a plurality of beams from a plurality of light sources modulatable independently according to image signals is deflected by a deflector at a uniform angular velocity. The deflected beams are condensed onto a surface to be scanned by a shared scan lens. As a result, light spots are formed separately in a sub-scanning direction. With the multi-beam, a plurality of lines on the surface to be scanned is scanned simultaneously at an approximately uniform speed in the above manner.

With the multi-beam, wavelengths (the wavelengths of the emitted light from the light sources) of the beams emitted from semiconductor lasers and light emitting diodes (LED) as the light sources vary according to individual light sources due to manufacturing tolerance. For this season, when a plurality of the light sources are used in the multi-beam, in general, the wavelengths of the emitted light from the light sources do not exactly match with one another. When the wavelengths of the emitted light from the light sources are different from one another, chromatic aberration of magnification in the scan lens becomes a problem. With such a multi-beam, the above-mentioned dot displacement occurs.

On the contrary, in the present embodiment, the differences in the screen angles between the black plate, the cyan plate, and the magenta plate are approximately equal with one another within 180 degrees as explained with reference to Fig. 4 in the first embodiment. When an image is formed into a maximum arrangement, the number of textures is less, and a high-quality image with less color unevenness and murky colors due to the dot displacement can be formed.

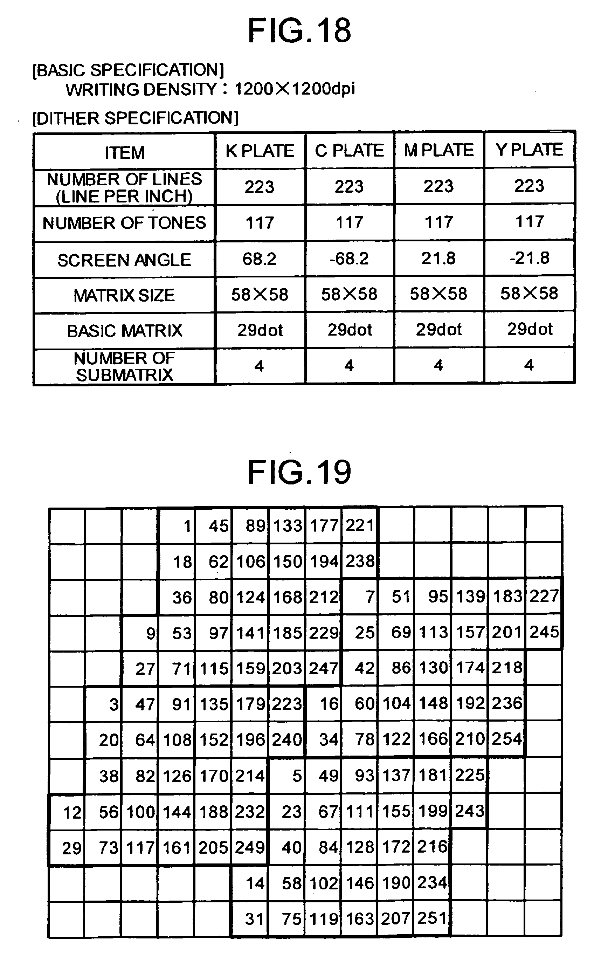

Fig. 18 depicts a specification of the dither matrix in the multi-beam. Fig. 19 is a typical diagram of a relationship between screen angles of the respective colors based on the specification of the dither matrix shown in Fig. 18. As mentioned later, in the multi-beam writing, a fluctuation in the dot positions in the main-scanning direction occurs. For example, in the specification shown in Fig. 18 of binary writing of 1200 dots per inch, the dither matrix shown in Fig. 19 is realized. Fig. 19 depicts the dither matrix of magenta. The similar dither matrix of cyan, yellow, and black is realized.

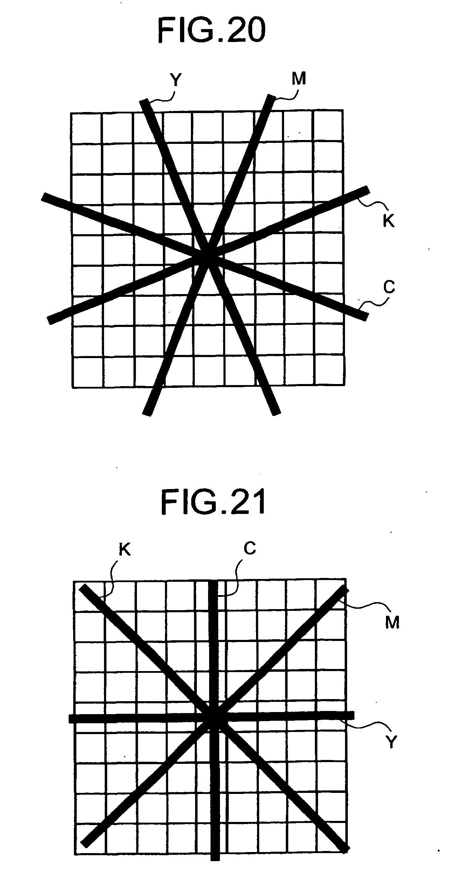

Fig. 20 depicts the screen angles of the output image. The screen angles of the respective colors are arranged with predetermined intervals. Fig. 21 depicts an example where the screen angles are arranged with predetermined intervals similarly to the screen angles shown in Fig. 20. As shown in Fig. 21, the screen angles in directions of 0 degree, 90 degrees, and ±45 degrees are arranged. The relationship is such that the screens with the respective colors are pushed back to the main-scanning direction and the sub-scanning direction.

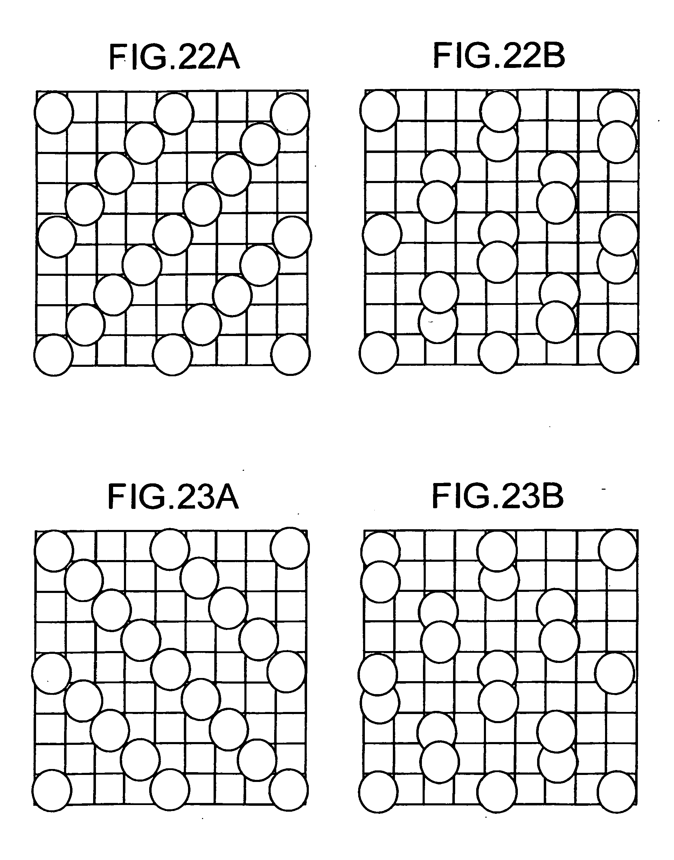

Figs. 22A and 22B depict formation of the screen of the black plate shown in Fig. 20 by 2-beam writing. Fig. 22A depicts the screen when the position of the writing beam is correct. At this time, the line basis of 45 degrees is formed. On the other hand, Fig. 22B depicts the screen when the positions of the black writing dots on the even-numbered rows deviate to the right by one dot.

Figs. 23A and 23B depict the screens of magenta. Fig. 23A depicts the screen when the position of the writing beam is correct, and at this time, the line basis of -45 degree is formed. On the other hand, Fig. 23B depicts the screen when the positions of the black writing dots on the even-numbered rows deviate to the left by one dot.

As shown in Figs. 22A to 23B, the halftone of 212 lines is formed in the direction of 45 degrees in a staggered manner in both the cases of black and magenta. That is, periodicity of the image basis is generated in the main-scanning direction on all the screens with respective colors, and the black screen is the same as the magenta screen. Since the dot positions of the screens deviate, however, when the screens are superposed with each other, a change in colors and color unevenness easily occur.

As mentioned later, the writing LDs to be used when the four color screens are superposed are unstable with respect to the screens. For this reason, on the overlapping of the four color screens, the shapes of the screens change, and colors change on each output print. Since the optical characteristics of the LDs are constant, however, the deviation relationship between the dot positions in the main-scanning direction of the 2-beam writing is constant.

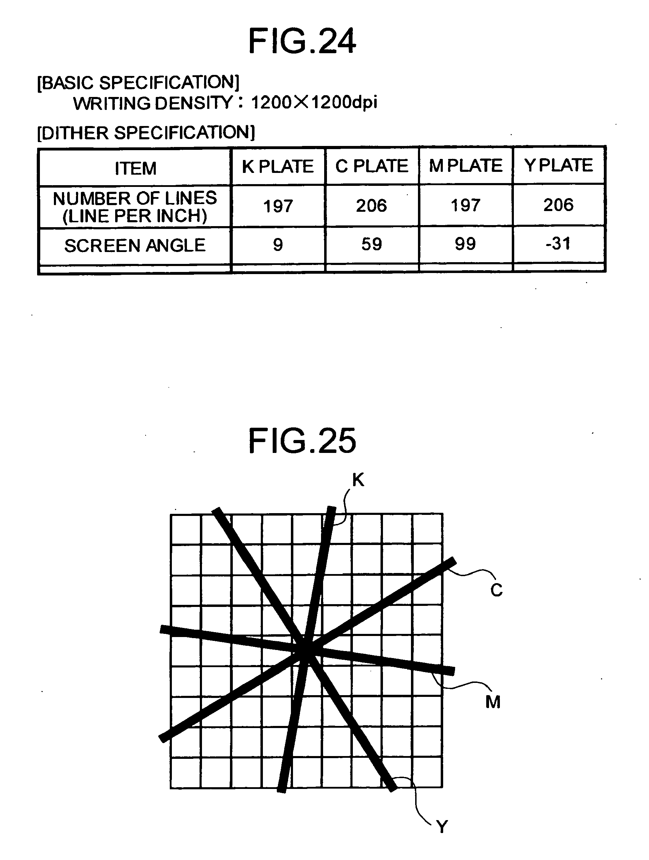

Fig. 24 depicts another specification of the dither matrix. Fig. 25 depicts a constitution of the screen angles based on the specification of the dither matrix shown in Fig. 24. As shown in Fig. 25, the line screens are arranged in a direction which is different from the main-scanning direction and the sub-scanning direction. Even when the dot positions deviate, therefore, the screens of different colors are not superposed unlike the case of the dot displacement explained with reference to Figs. 22A to 23B. For example, as shown in Fig. 21, even when the screen angles are set to be equal with one another, all the screens are rotated so the screens can be arranged in a direction different from the main-scanning direction and the sub-scanning direction.

At the screen angles explained with reference to Fig. 2 in the first embodiment, symmetrical shapes are hardly obtained, and thus a condition that the directions of the line screens are generally set in a direction different form the main-scanning direction and the sub-scanning direction can be satisfied. The interference which is recognized by human eyes can be, therefore, reduced.

As another example, when the direction of the periodicity of the periodic image basis generated due to the dot displacement is known in advance, the shapes may be asymmetrical only in that direction. Concretely, when the periodicity of the image basis is generated in the main-scanning direction, screens which are asymmetrical with respect to at least the main-scanning direction, may be formed. When the periodicity of the image basis is generated in the sub-scanning direction, screens which are asymmetrical with respect to at least the sub-scanning direction, may be formed.

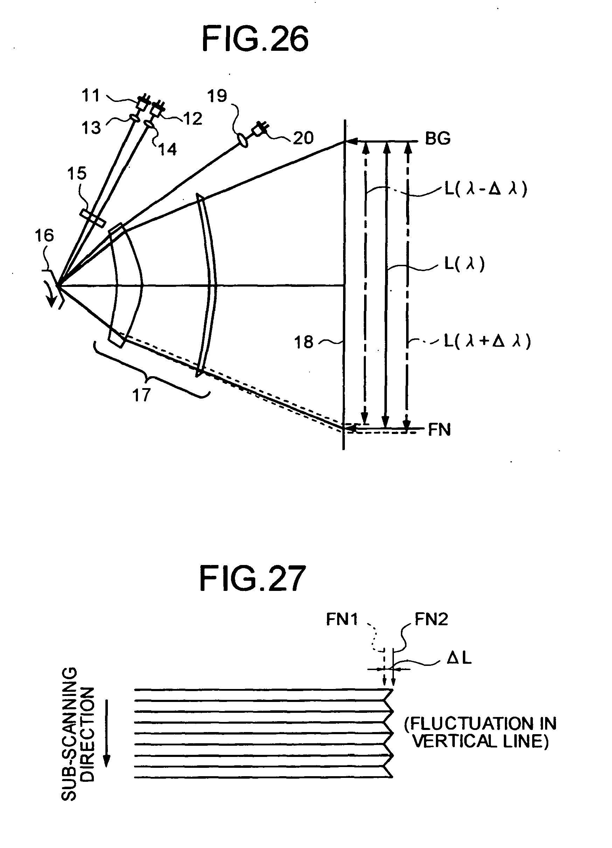

Fig. 26 depicts a constitution of the multi-beam according to the second embodiment. Semiconductor lasers 211 and 212 are independently modulated based on image signals. The beams emitted from the semiconductor lasers 211 and 212 enter coupling lenses 213 and 214, respectively. The coupling lenses 213 and 214 convert the entered beams into beams suitable for the optical system of the electrophotographic color printer 1. The beams transmitted through the coupling lenses 213 and 214 are focused to the sub-scanning direction by a cylinder lens 215. The beams are imaged as a line image which extends to the main-scanning direction.

A deflector 216 is a rotating polygon mirror having a deflecting reflection surface near an imaging position of the line image. The deflector 216 deflects the beams at a uniform acceleration according to its uniform-speed rotation. The deflected beams pass through a scan lens 217 and are condensed onto the surface to be scanned 218 as optical spots separated from each other in the sub-scanning direction by the function of the scan lens 217.

The two beams deflected by the deflector 216 are condensed onto an optical sensor 20 by a lens 219 so as to be detected. The two beams are separated from each other in the main-scanning direction, and are detected individually by the lens 219 and the optical sensor 200. Start of writing is synchronized in each beam.

The optical scanning is started by the optical spots in a writing start position BG on the surface to be scanned 218, and information for one line is written in predetermined time. In such a manner, a writing length of the information for one line, namely, a writing width is predetermined at the time of design.

An emission wavelength of the light source is predetermined at the time of design based on the standards of the semiconductor laser or the like to be used as the light source. A specification of the emission wavelength assumed on the design, namely, a working standard wavelength is designated by "λ". The working standard wavelength "λ" may be the emission wavelength of the semiconductor laser: 780 nanometers.

The function of the scan lens 217 depends on the wavelength of light. That is, the writing width depends on the emission wavelength of the light source. Further, a writing width determined as a design value is determined by the working standard wavelength λ. This writing width is represented as "standard writing width: L (λ)". The emission wavelength of the light source actually varies according to each light source.

When the emission wavelength of the light source deviates from the working standard wavelength λ only by $\lambda \pm \Delta\lambda$ ($\Delta\lambda$ is a minute change in wavelength), an actual writing width L ($\lambda \pm \Delta\lambda$) is different from the standard writing width L (λ) on the design as shown in Fig. 26.

The beams are detected on the way to a writing area, and the start of writing is synchronized. At this time, since the beam detecting position and the writing start position BG comparatively adjoin each other, the writing start positions BG of the respective beams substantially match with each other and thus do not deviate. On the writing end side, however, unignorable displacement occurs on writing end positions FN due to an influence of magnification error caused by chromatic aberration.

Fig. 27 is an explanatory diagram of a fluctuation in vertical lines. For example, when the light spots scan adjacent lines, as shown in Fig. 27, a deviation occurs alternately between a writing end position FN1 of one light spot and a writing end position FN2 of the other light spot. When vertical lines (straight line in the sub-scanning direction) are written on the portions, therefore, "fluctuation in vertical line", that is, fluctuation of on an originally straight line occurs.

For example, when the two semiconductor lasers, in which the working standard wavelength λ is 780 nanometers, are used as the light sources of the multi-beam explained with reference to Fig. 26, dispersion of an oscillation wavelength $\Delta\lambda$ is $\pm 20$ nanometers. There may be a case that the oscillation wavelength of one of the two semiconductor lasers used as the light sources in the electrophotographic color printer 1 is 800 nanometers, but the other oscillation wavelength is 760 nanometers.

When the standard writing width L (780 nanometers) on the design is 216 millimeters, a difference of about 70 micrometers occurs on the writing widths L (800 nanometers) and L (760 nanometers). On the contrary, a size of one dot as one unit of the writing by optical scanning is 63.5 micrometers with writing density of 400 dots per inch. That is, the displacement of 70 micrometers which is the "deviation" of the writing end position is equivalent to the size of one dot, and in this case, the fluctuation in vertical lines is barely noticeable for human eyes.

For example, however, when the vertical lines are written with 600 dots per pinch, the size of one dot is 40 micrometers. "Maximum fluctuation amplitude" of the fluctuation in vertical lines which is 70 micrometers is nearly twice as large as the size of one dot, and thus the fluctuation in vertical lines are barely recognized visually. According to research by the inventors, it is found that the fluctuation in vertical lines becomes noticeable when the maximum fluctuation amplitude is more than twice as large as the size of one dot.

The chromatic aberration as the magnification error of the scan lens which causes the fluctuation in vertical lines is explained, but the magnification error is caused by factors other than the chromatic aberration. In the multi-beam scan, a plurality of deflected beams is separated from one another in the sub-scanning direction. The beams are focused as the light spots onto the surface to be scanned by the shared scan lens. The position of the scan lens through which the beams pass, therefore, varies with the beams. When the position of the scan lens through which the beams pass varies in such a manner, the magnification error occurs.

As a measure to correct the magnification error due to the chromatic aberration, an achromatic lens can be used as the scan lens, but it is not suitable because it is costly. The scan lens occasionally includes a plastic lens, but a small variety of optical plastic materials are present, and thus the correction of the chromatic aberration is not always easy.

As a countermeasure, according to the image forming processing according to the present embodiment, color unevenness and murky colors caused by the fluctuation in vertical lines can be reduced. Even when the optical writing is executed by a multi-beam, a higher-quality image can be formed.

The present embodiments of present invention are explained above, but various changes and modifications can be made.

The screen angles are set as explained with reference to Fig. 2 in the first embodiment, but the setting of the screen angles is not limited to this in a first modified example.

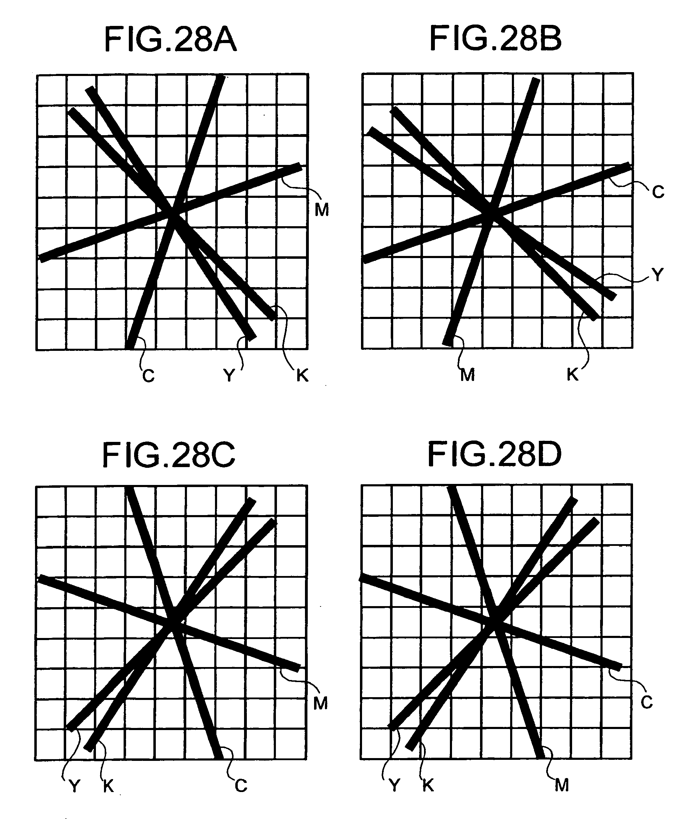

Figs. 28A to 28D depict other setting examples of the screen angles. The screen angles shown in Fig. 28A are arranged in a state that the arrangement of the screen angles according to the first embodiment explained with reference to Fig. 2 is inverted to the main-scanning direction. The differences in the screen angles of the color plates are similar to those shown in Fig. 2.

The screen angles shown in Fig. 28B are set in a state that the arrangement of the screen angles in Fig. 2 is rotated counterclockwise by 90 degrees. The differences in the screen angles of the color plates are similar to those in Fig. 2. Fig. 28C depicts the constitution in which the screen angles of the black plate and the yellow plate in Fig. 2 are interchanged. In this constitution, the difference in the screen angles between the yellow plate and the cyan plate is 63 degrees, that between the cyan plate and the magenta plate is 54 degrees, and that between the magenta plate and the yellow plate is 63 degrees. This constitution is larger than that in Fig. 2. Fig. 28D depicts the constitution in which the screen angle directions of the magenta plate and the cyan plate in Fig. 28C are interchanged. In this constitution, the difference in the screen angles between the black plate and the cyan plate is 63 degrees, that between the cyan plate and the magenta plate is 54 degrees, and that between the magenta plate and the black plate is 52 degrees.

The differences in the screen angles between the color plates other than that between the black plate and the yellow plate may be maintained at equal to or more than 45 degrees, and the arrangement is not limited to the present embodiment.

The electrophotographic color printer 1 according to the first and the second embodiments form an image composing four colors. The electrophotographic color printer 1 may, however, form an image composing three colors in a second modified example.

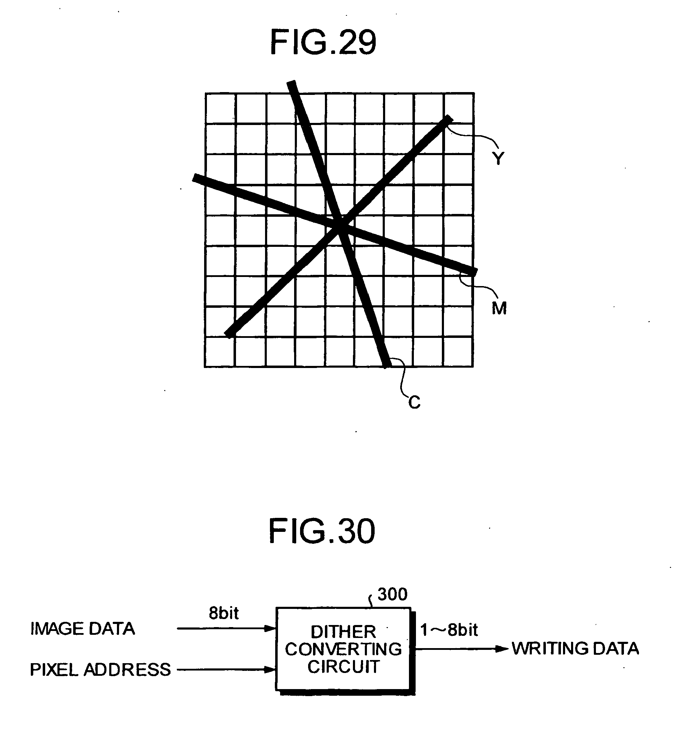

Fig. 29 depicts a constitution of the screen angles when a color image composing three colors of cyan, magenta, and yellow is formed. The screen angles shown in Fig. 29 are set to larger values such that the difference in the screen angles between the yellow plate and the cyan plate is 63 degrees, that between the cyan plate and the magenta plate is 54 degrees, and that between the magenta plate and the yellow plate is 63 degrees.

In this example, therefore, similarly to the image composing 4 colors explained in the present embodiments, an interference recognized by human eyes can be reduced. When an image is composed by three colors of cyan, magenta, and yellow, an image in which a picture portion has excellent granularity can be generally formed.

When the color image is formed by using the line screens, the differences in the three screen angles can be set to be larger. Further, the differences in the screen angles can be set to large and equal values. Besides this example, screen angles contemplated by the present invention can be constituted by interchanging the screens, and under conditions of writing resolution and the number of image lines.

When black is added and the color image is composed by four colors by executing the UCR processing for replacing a synthesized portion of cyan, magenta, and yellow by black, an adhesion amount of toner can be reduced by black.

In a third modified example, the middle tone processor 116 may have a dither converting circuit 300 shown in Fig. 30 instead of the multinary dither table explained with reference to Figs. 6A to 6D in the first embodiment.

The dither converting circuit 300 inputs image data of 8 bits representing tone levels of cyan, magenta, yellow, and black signals, and pixel addresses instructed according to the basic matrices shown in Figs. 6A to 9C thereinto with respect to one color plate signal of cyan, magenta, yellow, and black. The dither converting circuit 300 compares the image data with threshold values of cyan, magenta, yellow, and black, and outputs quantized writing data. In the case of multinary output, a plurality of threshold tables are present, and the output data are determined by a position of the input data between threshold tables. The multinary dither table explained in the first embodiment is suitable for the case of the binary writing or the like where the output multivalue is comparatively small. On the contrary, the dither converting circuit 300 of this example can realize a high-speed processing with comparatively small memory amount in the case of the multinary writing of 8-bit output.

The image forming apparatus is the electrophotographic color printer 1 in the present embodiments, but in the third modified example, the image forming apparatus may be a copying machine in which a scanner unit, not shown, is further added to the configuration of the electrophotographic color printer 1. In this case, the image processing is executed on a document image.

The dither processing is used as the middle tone processing for forming the screens with periodicity is used in the first and the second embodiments, but the middle tone processing is not limited to this in a fourth modified example. The middle tone processing for forming a pattern with periodicity may be used, and this method is not limited to the present embodiments.

According to the first aspect of the invention, since a plurality of screens, in which the minimum angle difference of the three differences in screen angles becomes equal to or more than 45 degrees, are formed, the texture level can be reduced further than conventional images. For example, even when a color image is formed by overlapping four screens, the angle differences between three screens whose texture is comparatively noticeable are set to larger than 45 degrees, and the residual differences in screen angles are set to smaller than 45 degrees. As a result, texture as a problem can be reduced. Further, color unevenness and murky colors can be reduced. A higher-quality color image can be, therefore, formed.

According to the second aspect of the invention, when equal to or more than 4 screens are superposed, the angle differences in a combination of the screens whose texture is hard to be noticeable are set to equal to or less than 45 degrees. This makes it possible to set the angle differences in a combination of the screens whose texture is easily noticeable to equal to or more than 45 degrees. As a result, color unevenness and murky colors can be reduced. A higher-quality color image can be, therefore, formed.

According to the third aspect of the invention, the angle differences between the three color screens other than the black screen whose texture is comparatively easily formed are set to larger than 45 degrees. As a result, color unevenness and murky colors are reduced, and a higher-quality color image can be formed.

According to the fourth aspect of the invention, the angle differences between the three color screens other than the yellow screen whose texture is comparatively easily formed are set to larger than 45 degrees. As a result, color unevenness and murky colors are reduced, and a higher-quality color image can be formed.

According to the fifth aspect of the invention, the angle difference between the cyan and the magenta screens, in which the texture becomes particularly a problem when they are superposed with each other, is enlarged. As a result, a high-quality image with low texture level and less color unevenness and murky colors can be formed.

According to the sixth aspect of the invention, since screens such that the angle differences between any adjacent screens are approximately equal with one another, are formed, a high-quality image with less texture and less color unevenness and murky colors can be formed by a simple constitution.

According to the seventh aspect of the invention, screens, such that any two line bases of line bases of the screens are asymmetrical with respect to at least one of the main-scanning direction and the sub-scanning direction in the optical writing by an exposing light source, are formed. For this reason, color unevenness and murky colors due to dot displacement can be reduced.

According to the eighth aspect of the invention, since a plurality of exposing light sources are further provided, displacement of dots written by the exposing light sources occasionally occurs. Even in this case, however, the screen forming unit forms screens which are asymmetrical with respect to at least one of the main-scanning direction and the sub-scanning direction in the optical writing. For this reason, color unevenness and murky colors due to displacement of dots can be reduced.

According to the ninth aspect of the invention, since image data are converted into quantized image data with at least equal to or more than 3 tones, a line image can be formed smoothly. A higher-quality image with less texture can be formed.

According to the tenth aspect of the invention, since line screens are formed starting from a barycenter of the screens, generation of texture is prevented, and a more stable image can be formed.

According to the eleventh aspect of the invention, since image data are converted into quantized image data by using a threshold matrix, image data forming the screens can be generated by a simple constitution. That is, a high-quality image can be formed by a simple constitution.

According to the twelfth aspect of the invention, screens such that any two line bases of the line bases of the screens are asymmetrical with respect to at least one of the main-scanning direction and the sub-scanning direction, can be formed. For this reason, color unevenness and murky colors caused by dot displacement in the main-scanning direction and the sub-scanning direction can be reduced. A high-quality image can be, therefore, formed.

According to the thirteenth aspect of the invention, four color screens such that any line bases are asymmetrical with respect to at least one of the main-scanning direction and the sub-scanning direction are formed. For this reason, color unevenness and murky colors caused when the screens of respective colors are superposed are reduced, and thus a high-quality image can be formed.

According to the fourteenth aspect of the invention, the screen forming unit forms screens such that when a superposing unit superposes the screens, angle differences between any two adjacent screens are approximately equal with one another. For this reason, a high-quality image with less texture and less color unevenness and murky colors can be formed by a simple constitution.

According to the fifteenth aspect of the invention, screens, such that a maximum interference period of predetermined three screens becomes smaller than a period which is 1/0.8 times as large as the period of the screens, are formed. For this reason, the texture level can be reduced further than the conventional images. Further, color unevenness and murky colors can be reduced. A higher-quality color image can be, therefore, formed.

According to the sixteenth aspect of the invention, when equal to or more than 4 screens are superposed with each other, a period of an interference generated when the screens whose texture is hard to be noticeable are superposed with each other is set to larger than a period which is 1/0.8 times as large as the period of the screens. As a result, screens such that a period of an interference caused by the overlapping of the screens whose texture is easily noticeable becomes smaller than a period which is 1/0.8 times as large as the period of the screens can be formed. As a result, color unevenness and murky colors can be reduced. A higher-quality color image can be, therefore, formed.

According to the seventeenth aspect of the invention, the screens, such that the minimum number of lines on the screen with interference caused by overlapping of predetermined three screens becomes larger than the number which is about 0.8 time as large as the number of lines on the three screens, are formed. For this reason, the texture level can be reduced further than the conventional images. Color unevenness and murky colors can be reduced. A higher-quality color image can be, therefore, formed.

According to the eighteenth aspect of the invention, the screens, such that the minimum number of lines on the screen with interference caused by the overlapping of three screens where texture is comparatively easily formed becomes larger than the number which is about 0.8 time as large as the number of lines on three screens where texture is comparatively easily formed, are formed. For this reason, the texture level can be reduced further than the conventional images. Further, color unevenness and murky colors can be reduced. A higher-quality color image can be, therefore, formed.

According to the nineteenth aspect of the invention, screens, such that when screens where the number of screen lines is about 200 are superposed, the number of lines on a screen with interference caused by the overlapping of predetermined three screens is about equal to or more than 140 can be formed. For this reason, the texture level can be reduced. A higher-quality color image can be, therefore, formed.

According to the twentieth aspect of the invention, since a color image is formed by overlapping three screens representing three colors, differences in screen angles can be set to larger than those when four color screens are superposed. For this reason, the texture level can be reduced further than the conventional images. Further, color unevenness and murky colors can be reduced. A higher-quality color image can be, therefore, formed.

According to the twenty-first aspect of the invention, a color image is formed by three screens representing three colors. An interference period which is generated when the screens are superposed can be, therefore, set to smaller than that when the four color screens are superposed. As a result, the texture level can be reduced further than the conventional images. Further, color unevenness and murky colors can be reduced. A higher-quality color image can be, therefore, formed.

According to the twenty-second aspect of the invention, a color image is formed by overlapping three screens representing three colors. For this reason, the number of lines on the screen with interference caused by the overlapping of the screens can be set to larger than that when the four color screens are superposed. As a result, the texture level can be reduced further than the conventional images. Further, color unevenness and murky colors can be reduced. A higher-quality color image can be, therefore, formed.

According to the twenty-third aspect of the invention, texture due to the overlapping of screens other than black one is reduced, so that a higher-quality color image can be formed.

According to the twenty-fourth aspect of the invention, texture due to the overlapping of screens other than yellow one is reduced, so that a higher-quality image can be formed.

According to the twenty-fifth aspect of the invention, a plurality of screens, such that a minimum angle difference of the angle differences among predetermined three screens becomes larger than 45 degrees, are formed. For this reason, the texture level can be reduced further than the conventional images. Further, color unevenness and murky colors can be reduced. A higher-quality color image can be, therefore, formed.

According to the twenty-sixth aspect of the invention, screens, such that any two line bases of the line bases of the screens are asymmetrical with respect to at least one of the main-scanning direction and the sub-scanning direction, can be formed. For this reason, color unevenness and murky colors caused by dot displacement in the main-scanning direction and the sub-scanning direction can be reduced. A high-quality image can be, therefore, formed.

According to the twenty-seventh aspect of the invention, screens, such that a maximum interference period of predetermined three screens becomes smaller than a period which is 1/0.8 times as large as the period of the screens, are formed. For this reason, the texture level can be reduced further than the conventional images. Further, color unevenness and murky colors can be reduced. A higher-quality color image can be, therefore, formed.

According to the twenty-eighth aspect of the invention, the screens, such that the minimum number of lines on a screen with interference caused by overlapping of predetermined three screens becomes larger than the number of lines which is about 0.8 time as large as the number of lines on the three screens, are formed. For this reason, the texture level can be reduced further than the conventional images. Further, color unevenness and murky colors can be reduced. A higher-quality color image can be, therefore, formed.

According to the twenty-ninth aspect of the invention, since a color image is formed by overlapping three screens representing three colors, the differences in screen angles can be set to larger than that when the four color screens are superposed. As a result, the texture level can be reduced further than the conventional images. Further, color unevenness and murky colors can be reduced. A higher-quality color image can be, therefore, formed.

According to the thirtieth aspect of the invention, a color image is formed by three screens representing three colors. An interference period generated when the screens are superposed can be, therefore, set to smaller than that when four color screens are superposed, thereby reducing the texture level further than the conventional images. Further, color unevenness and murky colors can be reduced. A higher-quality color image can be, therefore, formed.

According to the thirty-first aspect of the invention, since a color image is formed by overlapping three screens representing three colors, the number of lines on a screen with interference caused when the screens are superposed can be set to larger than that when four color screens are superposed. As a result, the texture level can be reduced further than the conventional images. Further, color unevenness and murky colors can be reduced. A higher-quality color image can be, therefore, formed.

The invention is defined by the following claims.

**Claims**

1. A color image forming apparatus (1) that forms a multitone image from image data, comprising:

   a converter (116) that converts multitone image data of respective colors into binary or multinary quantized image data;
   a screen forming unit that forms at least three screens representing different colors based on the quantized image data, wherein the at least three screens are line based screens; and
   a superposing unit that superposes the at least three screens formed by the screen forming unit to form a color image, wherein
   the screen forming unit forms the at least three screens such that a minimum angle difference among angle differences of predetermined three screens is larger than 45 degrees when the superposing unit superposes the at least three screens , **characterized in that**:

   the screen forming unit forms the at least three screens such that an angle difference between a cyan screen and a magenta screen has a maximum value among the angle differences of the predetermined three screens.

2. The color image forming apparatus according to claim 1, wherein the screen forming unit forms the at least three screens such that the minimum angle difference among the angle differences of the cyan screen, the magenta screen, and a yellow screen is larger than 45 degrees.

3. The color image forming apparatus according to claim 1, wherein the screen forming unit forms the at least three screens such that the minimum angle difference among the angle differences of the cyan screen, the magenta screen, and a black screen is larger than 45 degrees.

4. The color image forming apparatus according to any one of claims 1 to 3, wherein the screen forming unit forms the screens such that the angle differences between any two adjacent screens are approximately equal when the superposing unit superposes the screens.

5. The color image forming apparatus according to any one of claims 1 to 4, further comprising an exposing light source that optically writes the screens formed by the screen forming unit, wherein
   the screen forming unit forms the screens such that any two line bases among line bases of the screens are asymmetrical with respect to at least one of a main-scanning direction and a sub-scanning direction in optical writing by the exposing light source.

6. The color image forming apparatus according to claim 5, wherein a plurality of exposing light sources is prepared.

7. The color image forming apparatus according to any one of claims 1 to 6, wherein
   the converter converts the multitone image data of respective colors into the quantized image data with at least three tones, and
   the screen forming unit forms the screens based on the quantized image data with the at least three tones.

8. The color image forming apparatus according to any one of claims 1 to 7, wherein the screen forming unit forms a line screen starting from a barycenter of the screen based on its basic matrix.

9. The color image forming apparatus according to any one of claims 1 to 8, wherein the converter converts the image data into the quantized image data by comparing the image data with a plurality of threshold matrices predetermined for each of the colors.

10. The color image forming apparatus according to claim 5, wherein the screen forming unit forms the screens representing cyan, magenta, yellow, and black.

11. The color image forming apparatus according to claim 1, wherein the screen forming unit forms the at least three screens such that the maximum interference period among the interference periods caused by superposition of any two screens among the superposed three screens is smaller than 1/0.8 times a period of the screen when the superposing unit superposes the at least three screens used for colors which, when superposed, result in interferences noticeable for the human eye.

12. The color image forming apparatus according to claim 1, wherein the screen forming unit forms the at least three screens such that the minimum number of lines per inch of the interference pattern caused by superposition of any two screens among the superposed three predetermined screens is larger than about 0.8 times the number of lines per inch on the three screens when three predetermined screens of the at least three screens are superposed.

13. The color image forming apparatus according to claim 12, wherein the screens have about 200 lines per inch.

14. The color image forming apparatus according to any one of claims 1 to 13, wherein the screen forming unit forms the screens representing cyan, magenta, and yellow.

15. The color image forming apparatus according to any one of claims 1 to 14, wherein the screen forming unit forms the screens representing cyan, magenta, and black.

16. A color image forming method to form a multitone image from image data, comprising:

converting multitone image data of respective colors into binary or multinary quantized image data;
forming at least three screens representing different colors based on the quantized image data, wherein the at least three screens are line based screens; and
superposing the at least three screens formed by the screen forming unit to form a color image, wherein the forming includes forming the at least three screens such that a minimum angle difference among angle differences of predetermined three screens is larger than 45 degrees when the superposing unit superposes the at least three screens, **characterized by**:

forming the at least three screen such that an angle difference between a cyan screen and a magenta screen has a maximum value among the angle difference of the predetermined three screens.

17. The color image forming method according to claim 16, wherein
the forming includes forming the at least three screens such that any two line bases among line bases of the at least three screens are asymmetrical with respect to at least one of a main-scanning direction and a sub-scanning direction where an exposing light source optically writes the screens based on the quantized image data.

**Patentansprüche**

1. Farbbilderzeugungsvorrichtung (1), die ein mehrfarbiges Bild bzw. ein VielfarbtonBild von bzw. aus Bilddaten ausbildet, die aufweist:

einen Konverter bzw. Wandler (116), der mehrfarbige Bilddaten bzw. Vielfarbton-Bilddaten von jeweiligen Farben in binäre oder multinary bzw. multinäre quantisierte Bilddaten konvertiert bzw. wandelt;
eine Raster- bzw. Bildschirm- oder Bildschirmmasken-Erzeugungseinheit, die zumindest drei Raster bzw. Bildschirmmasken ausbildet, die unterschiedliche Farben darstellen, und zwar basierend auf den quantisierten Bilddaten, wobei die zumindest drei Raster bzw. Bildschirme oder Bildschirmmasken linienbasierende bzw. zeilenbasierende Raster bzw. Bildschirme oder Bildschirmmasken sind; und
eine Überlagerungseinheit, die die zumindest drei Raster bzw. Bildschirme oder Bildschirmmasken überlagert, die durch die Raster- bzw. Bildschirm- oder Bildschirmmasken-Erzeugungseinheit ausgebildet wurden, um ein Farbbild auszubilden,
wobei die Raster- bzw. Bildschirm- oder Bildschirmmasken-Erzeugungseinheit die zumindest drei Raster bzw. Bildschirme oder Bildschirmmasken ausbildet, derart, dass eine minimale Winkeldifferenz bzw. eine Minimumwinkeldifferenz unter Winkeldifferenzen von vorbestimmten drei Rastern bzw. Bildschirmen bzw. Bildschirmmasken größer als 45° ist, wenn die Überlagerungseinheit die zumindest drei Raster bzw. Bildschirme oder Bildschirmmasken überlagert, **dadurch gekennzeichnet, dass**:

die Raster- bzw. Bildschirm- oder Bildschirmmasken-Erzeugungseinheit die zumindest drei Raster bzw. Bildschirme oder Bildschirmmasken erzeugt, und zwar derart, dass eine Winkeldifferenz zwischen einem Cyan-Raster bzw. -Bildschirm oder einer Cyan-Bildschirmmaske und einem Magenta-Raster bzw. -Bildschirm oder einer Magenta-Bildschirmmaske einen Maximalwert unter den Winkeldifferenzen der vorbestimmten drei Raster bzw. Bildschirme oder Bildschirmmasken aufweist.

2. Farbbilderzeugungsvorrichtung nach Anspruch 1, wobei die Raster- bzw. Bildschirm- oder Bildschirmmasken-Erzeugungseinheit die zumindest drei Raster bzw. Bildschirme oder Bildschirmmasken ausbildet, derart, dass die minimale Winkeldifferenz bzw. Minimumwinkeldifferenz unter den Winkeldifferenzen des Cyan-Rasters bzw. -Bildschirms- oder der Cyan-Bildschirmmaske, des Magenta-Rasters bzw. Bildschirms oder Magenta-Bildschirmmaske und eines Gelb-Rasters bzw. -Bildschirms oder einer Gelb-Bildschirmmaske größer als 45° ist.

3. Farbbilderzeugungsvorrichtung nach Anspruch 1, wobei die Raster- bzw. Bildschirm- oder Bildschirmmasken-Erzeugungseinheit die zumindest drei Raster bzw. Bildschirme oder Bildschirmmasken ausbildet, derart, dass die minimale Winkeldifferenz bzw. Minimumwinkeldifferenz unter den Winkeldifferenzen des Cyan-Rasters bzw. -Bildschirms oder der Cyan-Bildschirmmaske, des Magenta-Rasters bzw. -Bildschirms oder der Magenta-Bildschirmmaske und eines Schwarz-Rasters bzw. -Bildschirms oder einer Schwarz-Bildschirmmaske größer als 45° ist.

4. Farbbilderzeugungsvorrichtung nach einem der Ansprüche 1 bis 3, wobei die Raster- bzw. Bildschirm- oder Bildschirmmasken-Erzeugungseinheit die Raster bzw. Bildschirme oder Bildschirmmasken ausbildet, derart, dass die Winkeldifferenzen zwischen irgendwelchen zwei angrenzenden Raster- bzw. Bildschirmen oder Bildschirmmasken ungefähr gleich sind, wenn die Überlagerungseinheit die Raster- bzw. Bildschirm- oder Bildschirmmasken überlagert.

5. Farbbilderzeugungsvorrichtung nach einem der Ansprüche 1 bis 4, die weiter eine Belichtungslichtquelle aufweist, die die Raster bzw. Bildschirme oder Bildschirmmasken beschreibt, die durch die Raster- bzw. Bildschirm- oder Bildschirmmasken-Erzeugungseinheit ausgebildet wurden, wobei
die Raster- bzw. Bildschirm- oder Bildschirmmasken-Erzeugungseinheit die Raster bzw. Bildschirme oder Bildschirmmasken ausbildet, und zwar derart, dass irgendwelche zwei Linienbasen bzw. Zeilenbasen unter Linienbasen bzw. Zeilenbasen der Raster bzw. Bildschirme oder Bildschirmmasken asymmetrisch sind, und zwar mit Bezug auf zumindest einer von einer Hauptabtastrichtung und einer Sub-Abtastrichtung bzw. Unterabtastrichtung beim optischen Schreiben durch die Belichtungslichtquelle.

6. Farbbilderzeugungsvorrichtung nach Anspruch 5, wobei eine Vielzahl von Belichtungslichtquellen vorbereitet bzw. bereitgestellt sind.

7. Farbbilderzeugungsvorrichtung nach einem der Ansprüche 1 bis 6, wobei der Konverter bzw. Wandler die mehrfarbigen Bilddaten bzw. Vielfarbton-Bilddaten der jeweiligen Farben in die quantisierten Bilddaten mit zumindest drei Tönen bzw. Farbtönen konvertiert bzw. wandelt, und
die Raster- bzw. Bildschirm- oder Bildschirmmasken-Erzeugungseinheit die Raster bzw. Bildschirme oder Bildschirmmasken basierend auf den quantisierten Bilddaten mit den zumindest drei Tönen bzw. Farbtönen ausbildet.

8. Farbbilderzeugungsvorrichtung nach einem der Ansprüche 1 bis 7, wobei die Raster- bzw. Bildschirm- oder Bildschirmmasken-Erzeugungseinheit ein Linienraster bzw. einen Linienbildschirm oder eine Linienbildschirmmaske ausbildet, und zwar beginnend von einem Mittelpunkt bzw. Schwerpunkt des Rasters bzw. Bildschirms oder der Bildschirmmaske, und zwar basierend auf seiner bzw. ihrer Grundmatrix.

9. Farbbilderzeugungsvorrichtung nach einem der Ansprüche 1 bis 8, wobei der Konverter bzw. Wandler die Bilddaten in quantisierte Bilddaten konvertiert bzw. wandelt, indem die Bilddaten mit einer Vielzahl von Schwellenwertmatrizen verglichen werden, die für jede der Farben vorbestimmt ist.

10. Farbbilderzeugungsvorrichtung nach Anspruch 5, wobei die Raster- bzw. Bildschirm- oder Bildschirmmasken-Erzeugungseinheit die Raster bzw. Bildschirme oder Bildschirmmasken ausbildet, die Cyan, Magenta, Gelb und Schwarz darstellen.

11. Farbbilderzeugungsvorrichtung nach Anspruch 1, wobei die Raster- bzw. Bildschirm- oder Bildschirmmasken-Erzeugungseinheit die zumindest drei Raster bzw. Bildschirme oder Bildschirmmasken ausbildet, und zwar derart, dass die maximale Interferenzperiode bzw. Maximuminterferenzperiode unter den Interferenzperioden, die durch die Überlagerung von irgendwelchen zwei Rastern bzw. Bildschirmen oder Bildschirmmasken unter den überlagerten drei Rastern bzw. Bildschirmen oder Bildschirmmasken kleiner als 1/0,8 Mal einer Periode des Rasters bzw. Bildschirms oder der Bildschirmmaske ist, wenn die Überlagerungseinheit die zumindest drei Raster bzw. Bildschirme oder Bildschirmmasken überlagert, die für die Farben verwendet werden, welche, wenn überlagert, in Interferenzen resultieren, die für das menschliche Auge bemerkbar bzw. sichtbar sind.

12. Farbbilderzeugungsvorrichtung nach Anspruch 1, wobei die Raster- bzw. Bildschirm- oder Bildschirmmasken-Erzeugungseinheit die zumindest drei Raster bzw. Bildschirme oder Bildschirmmasken ausbildet, und zwar derart, dass die minimale Anzahl von Linien bzw. Zeilen pro Inch des Interferenzmusters, das durch die Überlagerung von irgendwelchen zwei Rastern bzw. Bildschirmen oder Bildschirmmasken unter den überlagerten drei vorbestimmten Rastern bzw. Bildschirmen oder Bildschirmmasken verursacht bzw. bewirkt wurden, größer als ungefähr 0,8 Mal der Anzahl der Linien bzw. Zeilen pro Inch auf bzw. von den drei Rastern bzw. Bildschirmen bzw. Bildschirmmasken ist, wenn drei vorbestimmte Raster bzw. Bildschirme bzw. Bildschirmmasken von den zumindest drei Rastern bzw. Bildschirmen bzw. Bildschirmmasken überlagert werden.

13. Farbbilderzeugungsvorrichtung nach Anspruch 12, wobei die Raster bzw. Bildschirme oder Bildschirmmasken ungefähr 200 Linien bzw. Zeilen pro Inch aufweisen.

14. Farbbilderzeugungsvorrichtung nach einem der Ansprüche 1 bis 13, wobei die Raster- bzw. Bildschirm- oder Bildschirmmasken-Erzeugungseinheit die Raster bzw. Bildschirme oder Bildschirmmasken ausbildet, die Cyan, Magenta und Gelb darstellen.

15. Farbbilderzeugungsvorrichtung nach einem der Ansprüche 1 bis 14, wobei die Raster- bzw. Bildschirm- oder Bildschirmmasken-Erzeugungseinheit die Raster bzw. Bildschirme oder Bildschirmmasken ausbildet, die Cyan, Magenta und Schwarz darstellen.

16. Farbbilderzeugungsverfahren, um ein mehrfarbiges Bild bzw. ein Vielfarbtonbild von bzw. aus Bilddaten zu erzeugen, welches aufweist:

mehrfarbige Bilddaten bzw. Vielfarbtonbilddaten von jeweiligen Farben werden in binäre oder multinary bzw. multinäre quantisierte Bilddaten konvertiert bzw. gewandelt;
zumindest drei Raster bzw. Bildschirme oder Bildschirmmasken werden ausgebildet, die unterschiedliche Farben darstellen, und zwar basierend auf den quantisierten Bilddaten, wobei die zumindest drei Raster bzw. Bildschirme oder Bildschirmmasken zeilenbasierende bzw. linienbasierende Raster bzw. Bildschirme oder Bildschirmmasken sind; und
die zumindest drei Raster bzw. Bildschirme oder Bildschirmmasken, die durch die Raster- bzw. Bildschirm- oder Bildschirmmasken-Erzeugungseinheit ausgebildet wurden, werden überlagert, um ein Farbbild auszubilden, wobei
das Ausbilden das Ausbilden der zumindest drei Raster bzw. Bildschirme oder Bildschirmmasken einschließt, und zwar derart, dass eine Minimumwinkeldifferenz bzw. minimale Winkeldifferenz unter Winkeldifferenzen von vorbestimmten drei Rastern bzw. Bildschirmen oder Bildschirmmasken größer als 45° ist, wenn die Überlagerungseinheit die zumindest drei Raster bzw. Bildschirme oder Bildschirmmasken überlagert, **gekennzeichnet durch**:

die zumindest drei Raster bzw. Bildschirme oder Bildschirmmasken werden ausgebildet, und zwar derart, dass eine Winkeldifferenz zwischen einem Cyan-Raster bzw. -Bildschirm oder eine Cyan-Bildschirmmaske und einem Magenta-Raster bzw. -Bildschirm oder eine Magenta-Bildschirmmaske einen maximalen Wert bzw. Maximalwert unter der Winkeldifferenz von den vorbestimmen drei Rastern bzw. Bildschirmen oder Bildschirmmasken aufweist.

17. Farbbilderzeugungsverfahren nach Anspruch 16, wobei das Ausbilden das Ausbilden der zumindest drei Raster bzw. Bildschirme oder Bildschirmmasken beinhaltet, und zwar derart, dass irgendwelche zwei Linienbasen bzw. Zeilenbasen unter den Linienbasen bzw. Zeilenbasen der zumindest drei Raster bzw. Bildschirme oder Bildschirmmasken asymmetrisch sind, und zwar mit Bezug auf zumindest eine von einer Hauptabtastrichtung und einer Sub-Abtastrichtung bzw. Unterabtastrichtung, wo eine Belichtungslichtquelle optisch die Raster bzw. die Bildschirme oder Bildschirmmasken basierend auf den quantisierten Bilddaten schreibt.

**Revendications**

1. Appareil de formation d'images en couleurs (1) qui forme une image à plusieurs tonalités à partir de données d'image, comprenant :

   un convertisseur (116) qui convertit des données d'image à plusieurs tonalités de couleurs respectives en données d'image quantifiées binaires ou multinaires :

   une unité de formation d'écrans qui forme au moins trois écrans représentant des couleurs différentes sur la base des données d'image quantifiées, dans laquelle au moins trois écrans sont des écrans à base de lignes ;
   et
   une unité de superposition qui superpose les trois écrans au moins formés par l'unité de formation d'écrans afin de former une image en couleurs, dans lequel
   l'unité de formation d'écrans forme les trois écrans au moins de telle sorte qu'une différence d'angle minimum entre les différences d'angle des trois écrans prédéterminés soit supérieure à 45 degrés lorsque l'unité de superposition superpose les trois écrans au moins, **caractérisé en ce que** :

   l'unité de formation d'écrans forme les trois écrans au moins de telle sorte qu'une différence d'angle entre un écran cyan et un écran magenta possède une valeur maximum parmi les différences d'angle des trois écrans prédéterminés.

2. Appareil de formation d'images en couleurs selon la revendication 1, dans lequel l'unité de formation d'écrans forme les trois écrans au moins de telle sorte que la différence d'angle minimum parmi les différences d'angle de l'écran cyan, de l'écran magenta et d'un écran jaune soit supérieure à 45 degrés.

3. Appareil de formation d'images en couleurs selon la revendication 1, dans lequel l'unité de formation d'écrans forme les trois écrans au moins de telle sorte que la différence d'angle minimum parmi les différences d'angle de l'écran cyan, de l'écran magenta et d'un écran noir soit supérieure à 45 degrés.

4. Appareil de formation d'images en couleurs selon l'une quelconque des revendications 1 à 3, dans lequel l'unité de formation d'écrans forme les écrans de telle sorte que les différences d'angle entre deux écrans adjacents soient approximativement égales lorsque l'unité de superposition superpose les écrans.

5. Appareil de formation d'images en couleurs selon l'une quelconque des revendications 1 à 4, comprenant en outre une source de lumière d'exposition qui écrit optiquement les écrans formés par l'unité de formation d'écrans, dans lequel
   l'unité de formation d'écrans forme les écrans de telle sorte que deux bases de lignes parmi les bases de lignes des écrans soient asymétriques par rapport à au moins l'une d'une direction de balayage principale et d'une direction de sous-balayage lors d'une écriture optique par la source de lumière d'exposition.

6. Appareil de formation d'images en couleurs selon la revendication 5, dans lequel une pluralité de sources de lumière d'exposition est préparée.

7. Appareil de formation d'images en couleurs selon l'une quelconque des revendications 1 à 6, dans lequel le convertisseur convertit les données d'image à plusieurs tonalités de couleurs respectives en données d'image quantifiées ayant au moins trois tonalités, et
   l'unité de formation d'écrans forme les écrans sur la base des données d'image quantifiées ayant les trois tonalités au moins.

8. Appareil de formation d'images en couleurs selon l'une quelconque des revendications 1 à 7, dans lequel l'unité de formation d'écrans forme un écran à lignes partant d'un barycentre de l'écran sur la base de sa matrice basique.

9. Appareil de formation d'images en couleurs selon l'une quelconque des revendications 1 à 8, dans lequel le convertisseur convertit les données d'image en données d'image quantifiées en comparant les données d'image avec une pluralité de matrices de seuil prédéterminées pour chacune des couleurs.

10. Appareil de formation d'images en couleurs selon la revendication 5, dans lequel l'unité de formation d'écrans forme les écrans représentant le cyan, le magenta, le jaune et le noir.

11. Appareil de formation d'images en couleurs selon la revendication 1, dans lequel l'unité de formation d'écrans forme les trois écrans au moins de telle sorte que la période d'interférence maximum pari les périodes d'interférence provoquées par la superposition de deux écrans parmi les trois écrans superposés soit inférieure à 1/0,8 fois la période de l'écran lorsque l'unité de superposition superpose les trois écrans au moins utilisés pour les couleurs qui, lorsqu'elles sont superposées, entraînent des interférences visibles à l'oeil humain.

12. Appareil de formation d'images en couleurs selon la revendication 1, dans lequel l'unité de formation d'écrans forme les trois écrans au moins de telle sorte que le nombre minimum de lignes par pouce du motif d'interférence provoqué par la superposition de deux écrans parmi les trois écrans superposés prédéterminés soit supérieur à environ 0,8 fois le nombre de lignes par pouce sur les trois écrans lorsque trois écrans prédéterminés parmi les trois écrans au moins sont superposés.

13. Appareil de formation d'images en couleurs selon la revendication 12, dans lequel les écrans possèdent environ 200 lignes par pouce.

14. Appareil de formation d'images en couleurs selon l'une quelconque des revendications 1 à 13, dans lequel l'unité de formation d'écrans forme les écrans représentant le cyan, le magenta et le jaune.

15. Appareil de formation d'images en couleurs selon l'une quelconque des revendications 1 à 14, dans lequel l'unité de formation d'écrans forme les écrans représentant le cyan, le magenta et le noir.

16. Procédé de formation d'images en couleurs permettant de former une image à plusieurs tonalités à partir de données d'image, comprenant :

la conversion de données d'image à plusieurs tonalités de couleurs respectives en données d'image quantifiées binaires ou multinaires ;
la formation d'au moins trois écrans représentant des couleurs différentes sur la base des données d'image quantifiées, où les trois écrans au moins sont écrans à base de lignes ; et
la superposition des trois écrans au moins formés par l'unité de formation d'écrans afin de former une image en couleurs, où
la formation comprend la formation des trois écrans au moins de telle sorte qu'une différence d'angle minimum parmi les différences d'angle de trois écrans prédéterminés soit supérieure à 45 degrés lorsque l'unité de superposition superpose les trois écrans au moins, **caractérisé par** :

la formation des trois écrans au moins de telle sorte qu'une différence d'angle entre un écran cyan et un écran magenta possède une valeur maximum parmi la différence d'angle des trois écrans prédéterminés.

17. Procédé de formation d'images en couleurs selon la revendication 16, dans lequel la formation comprend la formation des trois écrans au moins de telle sorte que deux bases de lignes parmi les bases de lignes des trois écrans au moins soient asymétriques par rapport à au moins l'une d'une direction de balayage principale et d'une direction de sous-balayage lorsqu'une source de lumière d'exposition écrit optiquement les écrans sur la base des données d'image quantifiées.

# FIG.1

EP 1 494 458 B1

## FIG.2

## FIG.3

# FIG.4

| COLOR PLATE | NUMBER OF LINES | SCREEN ANGLE |
|:-----------:|:---------------:|:------------:|
| K | 212 | 45 |
| C | 190 | -18 |
| M | 190 | -72 |
| Y | 166 | 34 |

# FIG.5A

| | |
|---|---|
| 6 | 5 |
| 4 | 1 |
| 0 | 2 |
| 3 | 7 |

# FIG.5B

ROW DIRECTION →

| | |
|---|---|
| 0 | 1 |
| 2 | 3 |
| 4 | 5 |
| 6 | 7 |

↓ COLUMN DIRECTION

# FIG.5C

| | | | | | | | |
|---|---|---|---|---|---|---|---|
| 6 | 5 | 0 | 2 | 6 | 5 | 0 | 2 |
| 4 | 1 | 3 | 7 | 4 | 1 | 3 | 7 |
| 0 | 2 | 6 | 5 | 0 | 2 | 6 | 5 |
| 3 | 7 | 4 | 1 | 3 | 7 | 4 | 1 |
| 6 | 5 | 0 | 2 | 6 | 5 | 0 | 2 |
| 4 | 1 | 3 | 7 | 4 | 1 | 3 | 7 |
| 0 | 2 | 6 | 5 | 0 | 2 | 6 | 5 |
| 3 | 7 | 4 | 1 | 3 | 7 | 4 | 1 |

## FIG.6A

255 ┐
OUTPUT
DATA

0 ┘ 255
INPUT DATA

## FIG.6B

255 ┐
OUTPUT
DATA

0 ┘ 255
INPUT DATA

## FIG.6C

255 ┐
OUTPUT
DATA

0 ┘ 255
INPUT DATA

## FIG.6D

255 ┐
OUTPUT
DATA

0 ┘ 255
INPUT DATA

EP 1 494 458 B1

# FIG.7A

| 3 | 1 | 8 |
|---|---|---|
| 5 | 0 | 6 |
| 7 | 2 | 4 |
| 9 |   |   |

# FIG.7B

| 0 | 1 | 2 |
|---|---|---|
| 3 | 4 |   |
| 5 | 6 |   |
| 7 | 8 | 9 |

# FIG.7C

| 3 | 1 | 8 | 5 | 0 | 6 | 7 | 2 | 4 |
|---|---|---|---|---|---|---|---|---|
| 5 | 0 | 6 | 7 | 2 | 4 | 9 | 3 | 1 |
| 7 | 2 | 4 | 9 | 3 | 1 | 8 | 5 | 0 |
| 9 | 3 | 1 | 8 | 5 | 0 | 6 | 7 | 2 |
| 8 | 5 | 0 | 6 | 7 | 2 | 4 | 9 | 3 |
| 6 | 7 | 2 | 4 | 9 | 3 | 1 | 8 | 5 |
| 4 | 9 | 3 | 1 | 8 | 5 | 0 | 6 | 7 |
| 1 | 8 | 5 | 0 | 6 | 7 | 2 | 4 | 9 |
| 0 | 6 | 7 | 2 | 4 | 9 | 3 | 1 | 8 |
| 2 | 4 | 9 | 3 | 1 | 8 | 5 | 0 | 6 |

25

# FIG.8A

| 3 | 5 | 7 | 9 |
|---|---|---|---|
| 1 | 0 | 2 | |
| 8 | 6 | 4 | |

# FIG.8B

| 0 | 1 | 2 |
|---|---|---|
| 3 | 4 | |
| 5 | 6 | |
| 7 | 8 | 9 |

# FIG.8C

| 3 | 5 | 7 | 9 | 8 | 6 | 4 | 1 |
|---|---|---|---|---|---|---|---|
| 1 | 0 | 2 | 3 | 5 | 7 | 9 | 8 |
| 8 | 6 | 4 | 1 | 0 | 2 | 3 | 5 |
| 5 | 7 | 9 | 8 | 6 | 4 | 1 | 0 |
| 0 | 2 | 3 | 5 | 7 | 9 | 8 | 6 |
| 6 | 4 | 1 | 0 | 2 | 3 | 5 | 7 |
| 7 | 9 | 8 | 6 | 4 | 1 | 0 | 2 |
| 2 | 3 | 5 | 7 | 9 | 8 | 6 | 4 |
| 4 | 1 | 0 | 2 | 3 | 5 | 7 | 9 |

# FIG.9A

| 8 | 11 | 5 | 1 | 6 |
|---|----|---|---|---|
| 12 | 7 | 0 | 3 | 10 |
| 9 | 4 | 2 | | |

# FIG.9B

| 0 | 1 | 2 |
|---|----|---|
| 3 | 4 | 5 |
| 6 | 7 | 8 |
| 9 | 10 | |
| 11 | 12 | |

# FIG.9C

| 8 | 11 | 5 | 1 | 6 | 12 | 7 | 0 |
|---|----|---|---|---|----|---|---|
| 12 | 7 | 0 | 3 | 10 | 9 | 4 | 2 |
| 9 | 4 | 2 | 8 | 11 | 5 | 1 | 6 |
| 5 | 1 | 6 | 12 | 7 | 0 | 3 | 10 |
| 0 | 3 | 10 | 9 | 4 | 2 | 8 | 11 |
| 2 | 8 | 11 | 5 | 1 | 6 | 12 | 7 |
| 6 | 12 | 7 | 0 | 3 | 10 | 9 | 4 |
| 10 | 9 | 4 | 2 | 8 | 11 | 5 | 1 |
| 11 | 5 | 1 | 6 | 12 | 7 | 0 | 3 |

# FIG.10

MOIRE FREQUENCY (RELATIVE VALUE) vs ANGLE DIFFERENCE [deg]

# FIG.11

30 DEGREES

# FIG.12

50 DEGREES

# FIG.13

60 DEGREES

# FIG.14

TEXTURE LEVEL

200L/inch

IMAGE FREQUENCY→

# FIG.15

FIG.16A FIG.16B FIG.16C

FIG.17

# FIG.18

[BASIC SPECIFICATION]
   WRITING DENSITY : 1200×1200dpi

[DITHER SPECIFICATION]

| ITEM | K PLATE | C PLATE | M PLATE | Y PLATE |
|---|---|---|---|---|
| NUMBER OF LINES (LINE PER INCH) | 223 | 223 | 223 | 223 |
| NUMBER OF TONES | 117 | 117 | 117 | 117 |
| SCREEN ANGLE | 68.2 | -68.2 | 21.8 | -21.8 |
| MATRIX SIZE | 58×58 | 58×58 | 58×58 | 58×58 |
| BASIC MATRIX | 29dot | 29dot | 29dot | 29dot |
| NUMBER OF SUBMATRIX | 4 | 4 | 4 | 4 |

# FIG.19

| | | | | | | | | | | | | | |
|---|---|---|---|---|---|---|---|---|---|---|---|---|---|
| | | | 1 | 45 | 89 | 133 | 177 | 221 | | | | | |
| | | | 18 | 62 | 106 | 150 | 194 | 238 | | | | | |
| | | | 36 | 80 | 124 | 168 | 212 | 7 | 51 | 95 | 139 | 183 | 227 |
| | | 9 | 53 | 97 | 141 | 185 | 229 | 25 | 69 | 113 | 157 | 201 | 245 |
| | | 27 | 71 | 115 | 159 | 203 | 247 | 42 | 86 | 130 | 174 | 218 | |
| | 3 | 47 | 91 | 135 | 179 | 223 | 16 | 60 | 104 | 148 | 192 | 236 | |
| | 20 | 64 | 108 | 152 | 196 | 240 | 34 | 78 | 122 | 166 | 210 | 254 | |
| | 38 | 82 | 126 | 170 | 214 | 5 | 49 | 93 | 137 | 181 | 225 | | |
| 12 | 56 | 100 | 144 | 188 | 232 | 23 | 67 | 111 | 155 | 199 | 243 | | |
| 29 | 73 | 117 | 161 | 205 | 249 | 40 | 84 | 128 | 172 | 216 | | | |
| | | | | | 14 | 58 | 102 | 146 | 190 | 234 | | | |
| | | | | | 31 | 75 | 119 | 163 | 207 | 251 | | | |

## FIG.20

## FIG.21

# FIG.22A

# FIG.22B

# FIG.23A

# FIG.23B

# FIG.24

[BASIC SPECIFICATION]
    WRITING DENSITY : 1200×1200dpi

[DITHER SPECIFICATION]

| ITEM | K PLATE | C PLATE | M PLATE | Y PLATE |
|---|---|---|---|---|
| NUMBER OF LINES (LINE PER INCH) | 197 | 206 | 197 | 206 |
| SCREEN ANGLE | 9 | 59 | 99 | -31 |

# FIG.25

# FIG.26

BG

L(λ-Δλ)

L(λ)

L(λ+Δλ)

FN

# FIG.27

FN1    FN2

ΔL

SUB-SCANNING DIRECTION

(FLUCTUATION IN VERTICAL LINE)

## FIG.28A

## FIG.28B

## FIG.28C

## FIG.28D

# FIG.29

# FIG.30

IMAGE DATA ──── 8bit ──→ ┌─────────────┐ 300
                          │   DITHER    │ 1~8bit
                          │ CONVERTING  │──────→ WRITING DATA
PIXEL ADDRESS ──────────→ │   CIRCUIT   │
                          └─────────────┘

**EP 1 494 458 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61214662 A
- JP H10145626 A
- JP H10257337 A
- JP 2001086336 A
- JP 2002118746 A
- US 5901275 A